(19) Europäisches Patentamt
European Patent Office
Office européen des brevets

(11) **EP 2 523 033 B1**

(12) **EUROPEAN PATENT SPECIFICATION**

(45) Date of publication and mention
of the grant of the patent:
**02.03.2016 Bulletin 2016/09**

(51) Int Cl.:
***G02B 26/04*** (2006.01)      ***G09G 3/34*** (2006.01)

(21) Application number: **12167875.9**

(22) Date of filing: **14.05.2012**

(54) **Image display device**

Bildanzeigevorrichtung

Dispositif d'affichage d'images

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.05.2011   JP 2011107314**

(43) Date of publication of application:
**14.11.2012   Bulletin 2012/46**

(73) Proprietor: **Pixtronix, Inc.
San Diego, CA 92121 (US)**

(72) Inventor: **Akimoto, Hajime**
**Chiba-ken, 297-8622 (JP)**

(74) Representative: **Dunlop, Hugh Christopher et al
RGC Jenkins & Co.
26 Caxton Street
London SW1H 0RJ (GB)**

(56) References cited:
**WO-A1-2006/091738      WO-A2-2008/091339**

## Description

BACKGROUND OF THE INVENTION

1. Field of the Invention

The present invention relates to an image display device and, more particularly, to an image display device employing a mechanical shutter.

2. Description of the Related Art

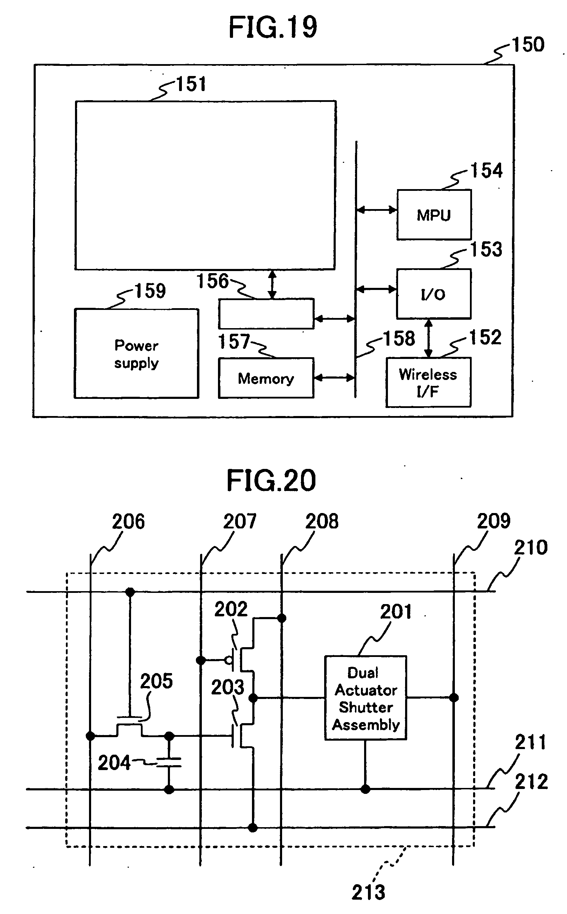

Fig. 20 is a diagram showing a shutter control circuit of an image display device employing a mechanical shutter according to the related art. A signal line 206 is provided in each pixel 213. The signal line 206 and one end of a signal storage capacitor 204 are connected via a scanning switch 205. The one end of the signal storage capacitor 204 is further connected to a gate of an nMOS transistor for writing shutter negative voltage 203. A drain of the nMOS transistor for writing shutter negative voltage 203 is connected to a drain of a pMOS transistor for writing shutter positive voltage 202. The pixel 213 includes a dual actuator shutter assembly 201 connected to a shutter voltage line 211. One of two control electrodes of the dual actuator shutter assembly 201 is connected to the drain of the nMOS transistor for writing shutter negative voltage 203. The other control electrode is connected to a control electrode voltage line 209. The other end of the signal storage capacitor 204 is connected to a shutter voltage line 211. A source of the nMOS transistor for writing shutter negative voltage 203 is connected to an nMOS source voltage line for writing shutter negative voltage 212. A gate and the drain of the pMOS transistor for shutter writing positive voltage 202 are respectively connected to a pMOS gate voltage line for writing shutter positive voltage 207 and a positive voltage line 208. A gate of the scanning switch 205 is connected to a scanning line 210. The dual actuator shutter assembly 201 is provided to be opposed to an opening provided on a light blocking surface. A plurality of such pixels are arrayed in a matrix shape in the image display device.

The operation of the image display device is explained. An image signal voltage written in the signal line 206 is stored in the signal storage capacitor 204 via the scanning switch 205 according to sequential scanning of the scanning line 210. Subsequently, after the write scanning of the image signal voltage in the signal storage capacitors 204 of all the pixels, in each of the pixels, amplified writing of an image signal is applied to one of the control electrodes of the dual actuator shutter assembly 201 on the basis of the written image signal voltage. Specifically, first, in all the pixels, the pMOS gate voltage line for writing shutter positive voltage 207 is set to a low voltage for a predetermined period, whereby the pMOS transistor for writing shutter positive voltage 202 is turned to an ON state only in this period. A predetermined positive voltage applied to the positive voltage line 208 is pre-charged in one of the control electrodes of the dual actuator shutter assembly 201. Subsequently, the nMOS source voltage line for writing shutter negative voltage 212 is set to a predetermined low voltage for a predetermined period. At this point, when a high voltage is written in the signal storage capacitor 204 as an image signal voltage, the nMOS transistor for writing shutter negative voltage 203 changes to an ON state only in this period. Consequently, the voltage of one of the control electrodes of the dual actuator shutter assembly 201 is rewritten to a predetermined low voltage applied to the nMOS source voltage line for writing shutter negative voltage 212. When a low voltage is written in the signal storage capacitor 204 as an image signal voltage, the nMOS transistor for writing shutter negative voltage 203 maintains an OFF state in this period as well. Therefore, the voltage of one of the control electrodes of the dual actuator shutter assembly 201 maintains the predetermined positive voltage already pre-charged.

In this way, the amplified writing of the image signal is applied to one of the control electrodes of the dual actuator shutter assembly 201. The dual actuator shutter assembly 201 can be electrostatically opened and closed by controlling an applied voltage to the control electrode voltage line 209 in parallel to the amplified writing. The opening provided on the light blocking surface is opened and closed by the dual actuator shutter assembly 201 in this way to control a transmission amount of light. The image display device can display, on the pixel matrix, an image corresponding to the written image signal voltage. The related art explained above is explained in detail in United States Patent Application Publication No. 2008/174532 and the like.

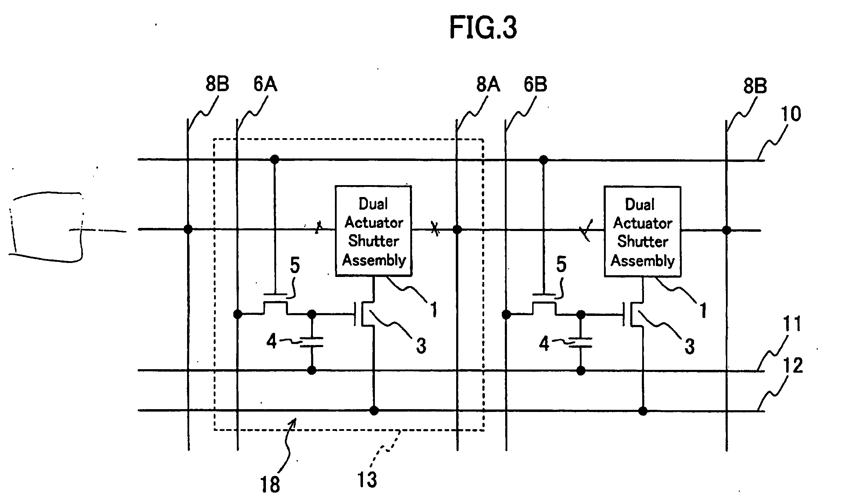

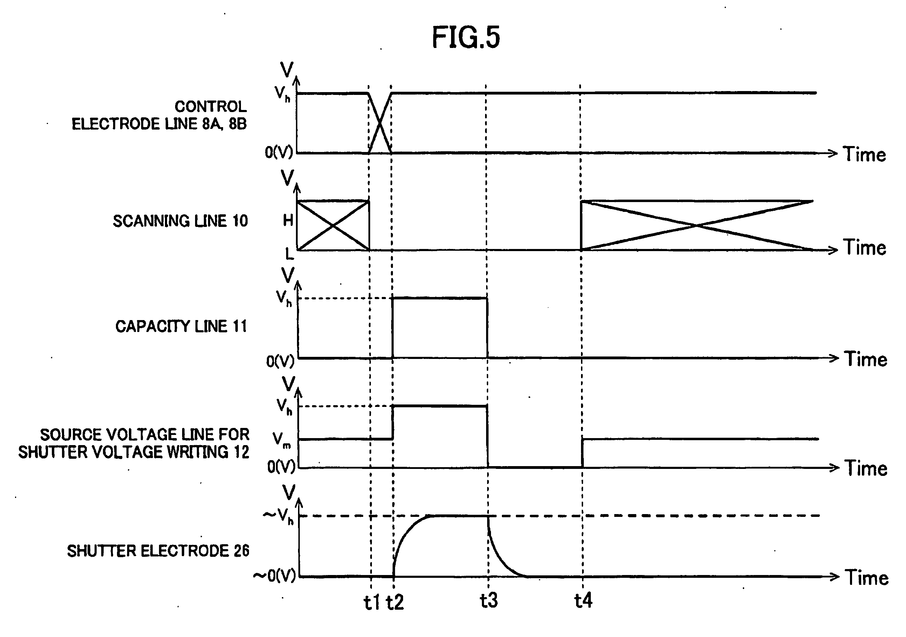

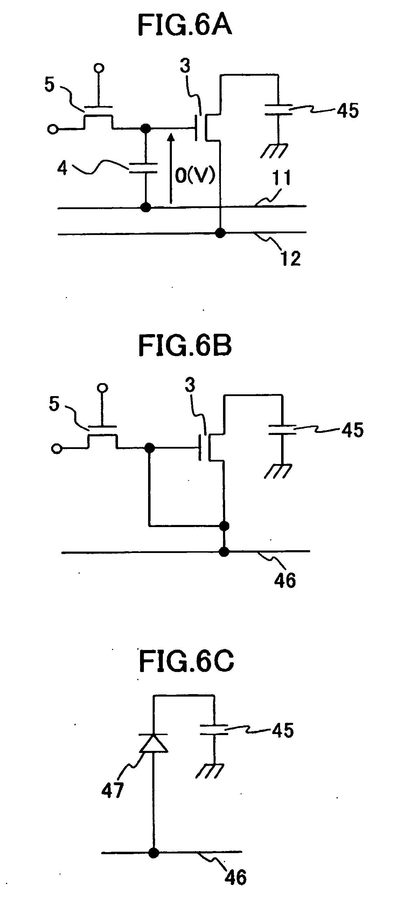

Document WO 2008/091339 discloses various constructional aspects of a display including a dual actuator shutter assembly comprising a shutter and two independently controllable actuators (see figures 6A, 6B), with the shutter moving over a transparent substrate (504; figure 5), the display further including a reflective film (506; paragraph 0125 and figure 5), a light source and light guide (518+516; figure 5) and a control matrix suitable for controlling light modulators (300; figure 3).

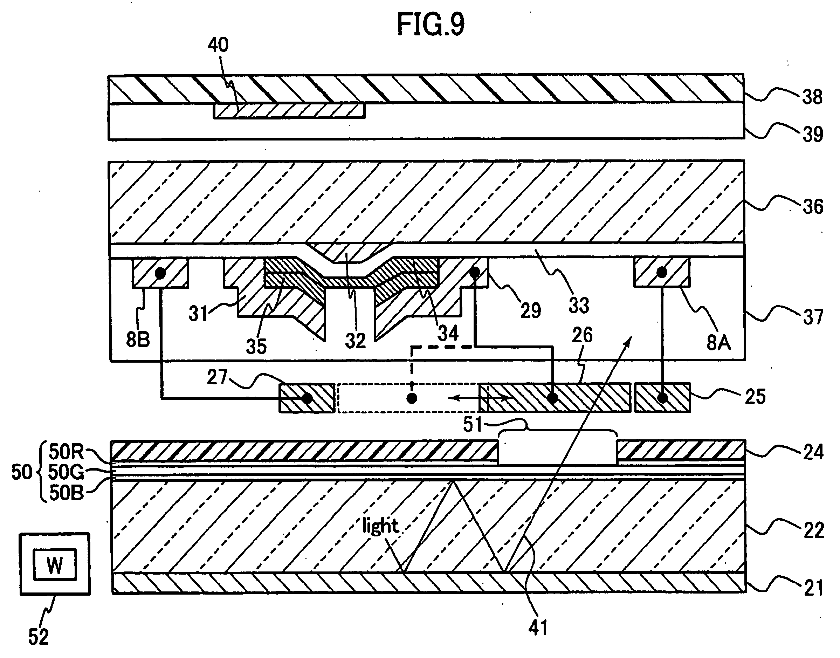

Moreover, document WO 2006/091738 teaches various control matrices suitable for addressing an array of pixels in a display device (figures 9, 18, 19).

SUMMARY OF THE INVENTION

In the related art, it is necessary to provide a large number of wires in each of the pixels in order to control the dual actuator shutter assembly 201 of each of the pixels. Therefore, circuits provided in the pixel are dense and it is difficult to increase the yield in mass production. For example, in the example shown in Fig. 20, seven wires in total including the signal line 206, the pMOS gate voltage line for writing shutter positive voltage 207, the positive voltage line 208, the control electrode voltage line 209, the scanning line 210, the shutter voltage line 211, and the nMOS source voltage line for writing shutter negative voltage 212 are necessary in each of the pixels.

The present invention has been devised in view of the above circumstances and it is an object of the present invention to provide a display device that can reduce wires in a pixel, increase the yield in mass production, and realize a reduction in cost while maintaining high image quality performance, which is the advantage of the related art employing the mechanical shutter, in that, for example, contrast and color reproducibility are high while power consumption is low.

The problem can be solved by an image display device according to claim 1.

The "planar light source" means to include a backlight or the like configured to emit, via a light guide or the like, light emitted from a light source such as a point light source.

According to the present invention, it is possible to further reduce wires in a pixel while maintaining high image quality performance, which is the advantage of the related art employing the mechanical shutter, in that, for example, contrast and color reproducibility are high while power consumption is low. Therefore, it is possible to increase the yield in mass production and realize a reduction in cost.

BRIEF DESCRIPTION OF THE DRAWINGS

Fig. 1 is a diagram showing an image display device according to a first embodiment;
Fig. 2 is a pixel peripheral circuit diagram of a TFT substrate of the image display device according to the first embodiment;
Fig. 3 is a diagram showing a shutter control circuit of the image display device according to the first embodiment;
Fig. 4 is a diagram showing the sectional structure of a pixel in the image display device according to the first embodiment;
Fig. 5 is an operation timing chart of the shutter control circuit shown in Fig. 3;
Figs. 6A-5C are diagrams for explaining how to write signal voltage to a shutter electrode when the initial image signal voltage is 0 (V);
Figs. 7A-7C are diagrams for explaining how to writing signal voltage to the shutter electrode when the initial image signal voltage is $V_{sigH}$;
Fig. 8 is a configuration diagram of a pixel array in a display region of an image display device according to a second embodiment;
Fig. 9 is a diagram showing the sectional structure of a pixel in the image display device according to the second embodiment;
Fig. 10 is a diagram showing the sectional structure of a pixel in an image display device according to a third embodiment;
Fig. 11 is a diagram showing a shutter control circuit of an image display device according to a fourth embodiment;
Fig. 12 is a pixel peripheral circuit diagram of an image display device according to a fifth embodiment;
Fig. 13 is a diagram showing a shutter control circuit of the image display device according to the fifth embodiment;
Fig. 14 is a diagram showing the sectional structure of a pixel in the image display device according to the fifth embodiment;
Fig. 15 is an operation timing chart of the shutter control circuit shown in Fig. 13;
Fig. 16 is a pixel peripheral circuit diagram of an image display device according to a sixth embodiment;
Fig. 17 is a diagram showing a shutter control circuit of the image display device according to the sixth embodiment;
Fig. 18 is an operation timing chart of the shutter control circuit shown in Fig. 17;
Fig. 19 is a configuration diagram of an Internet image display apparatus according to a seventh embodiment; and
Fig. 20 is a diagram showing a shutter control circuit according to the related art.

DETAILED DESCRIPTION OF THE INVENTION

Embodiments of the present invention are explained below with reference to the accompanying drawings. In the drawings, the same or equivalent components are denoted by the same reference numerals and signs and redundant explanation of the components is omitted.

[First Embodiment]

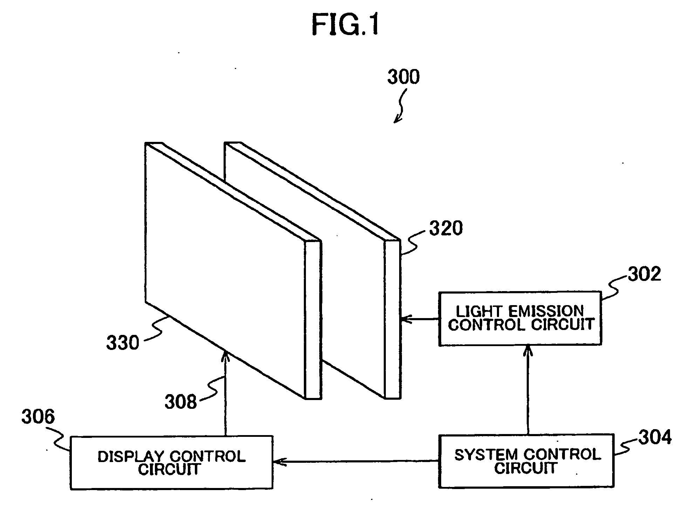

The configuration and the operation of an image display device according to a first embodiment of the present invention are sequentially explained with reference to Figs. 1 to 7.

Fig. 1 is a diagram showing an image display device 300 according to the first embodiment of the present invention that performs control of a.displayed image using shutter mechanisms of pixels. The image display device 300 includes a backlight source 320 including, for each of the pixels, a light blocking film (explained below) including an opening that transmits light, a TFT (Thin Film Transistor) substrate 330 that controls transmission of light from the backlight source 320 using a shutter mechanism unit (explained below) and includes a touch panel, a light emission control circuit 302 that causes the backlight source 320 to emit lights of three colors R (red), G (green), and B (blue) to be shifted from one another in time, a display control circuit 306 that controls, via a panel control line 308, the operation of the shutter mechanism unit of the TFT substrate 330, and a system control circuit 304 that performs comprehensive control of the light emission control circuit 302 and the display control circuit 306.

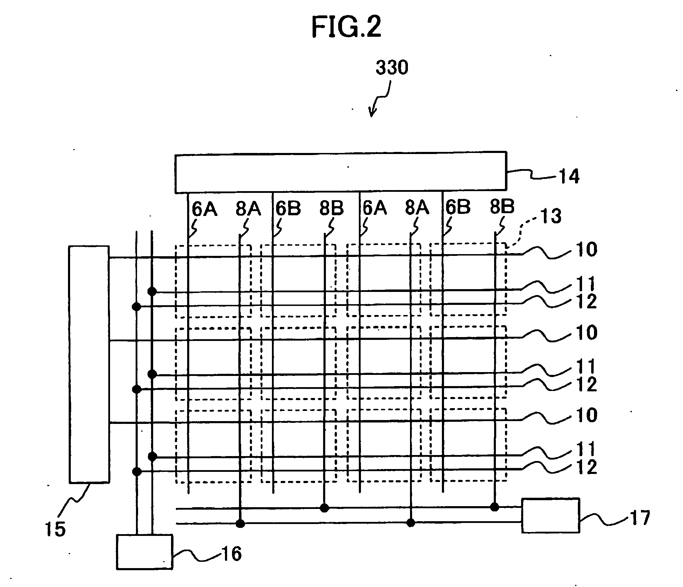

Fig. 2 is a pixel peripheral circuit diagram of the TFT substrate 330 shown in Fig. 1. Pixels 13 arrayed in a matrix shape form a display region. In the pixels 13, signal lines 6A and 6B and control electrode lines 8A and 8B are provided in the column direction and scanning lines 10, capacity lines 11, and source voltage lines for writing shutter voltage 12 are provided in the row direction. In the periphery of the display region, one ends of the signal lines 6A and 6B are connected to an image signal voltage writing circuit 14 and one ends of the control electrode lines 8A and 8B are connected to a control electrode driving circuit 17. One ends of the scanning lines 10 are connected to the scanning circuit 15 and one ends of the capacity lines 11 and the source voltage lines for writing shutter voltage 12 are connected to a writing driving circuit 16. In Fig. 2, for simplification, the display region is shown as a matrix of 4x3 pixels. However, the technical idea disclosed by the present invention does not specifically limit the number of pixels.

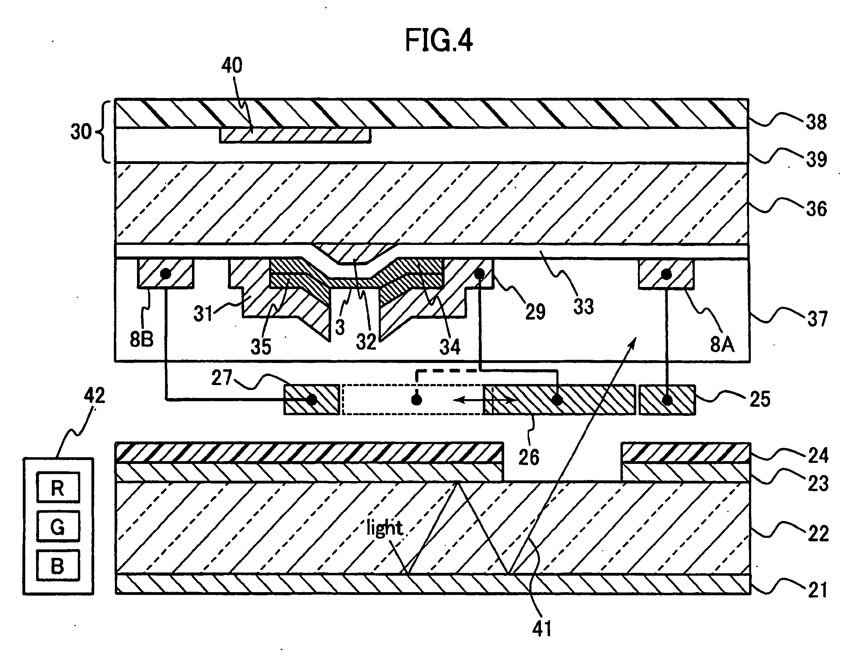

In Fig. 3, a shutter control circuit 18 in each of the pixels 13 shown in Fig. 2 is shown. The signal line 6A is provided in each of the pixels 13. The signal line 6A and a signal storage capacitor 4 are connected by a scanning switch 5. The signal storage capacitor 4 is further connected to a gate of a shutter voltage writing transistor 3. A drain of the shutter voltage writing transistor 3 is connected to a shutter electrode of a dual actuator shutter assembly 1. One of two control electrodes of the dual actuator shutter assembly 1 is connected to the control electrode line 8A in the pixel 13. The other control electrode is connected to the control electrode line 8B of the pixel 13 adjacent to the pixel 13. The other end of the signal storage capacitor 4 is connected to the capacity line 11. A source of the shutter voltage writing transistor 3 is connected to the source voltage line for writing shutter voltage 12. A gate of the scanning switch 5 is connected to the scanning line 10. As explained below with reference to Fig. 4, the dual actuator shutter assembly 1 is provided to be opposed to the opening provided on the light blocking surface.

In Fig. 3, two pixels 13, i.e., a pixel 13 including the signal line 6A and the control electrode line 8A and another pixel 13 including the signal line 6B and the control electrode line 8B, are shown. Although both the pixels 13 have different driving conditions as explained below, the pixels 13 have the same basic shutter control circuit.

Fig. 4 is a diagram showing the sectional structure of a pixel section of the pixel 13. On a glass substrate 36, an amorphous silicon thin film transistor is provided. The amorphous silicon thin film transistor includes a gate electrode 32 formed of high melting metal, a gate insulating film 33, a non-doped amorphous silicon thin film 34, an amorphous silicon thin film 35 doped with high-density n-type impurities, a source electrode 31, and a drain electrode 29. The amorphous silicon thin film transistor corresponds to the shutter voltage writing transistor 3. Further, on the glass substrate 36, the control electrode lines 8A and 8B are formed in an A1 wiring layer, which is the same as a layer of the source electrode 31 and the drain electrode 29. The control electrode lines 8A and 8B are covered with a protective film 37 including a multilayer film of silicon nitride and an organic material.

On the protective film 37, the dual actuator shutter assembly 1 including a shutter electrode 26 and two control electrodes 25 and 27 is provided. The drain electrode 29 is connected to the shutter electrode 26, the control electrode line 8A is connected to the control electrode 25, and the control electrode line 8B is connected to the control electrode 27 respectively via contact holes. Insulating films are formed on the surface of the shutter electrode 26 and the surfaces of the two control electrodes 25 and 27 to prevent short circuit in the case of contacting with each other. The position of the shutter electrode 26 is controlled by an electric field formed according to a correlation between a voltage input to the shutter electrode 26 and a voltage input to the two control electrodes 25 and 27. Therefore, in Fig. 4, a movable range of the shutter electrode 26 is also shown using a broken line. Although not shown in Fig. 4, other transistors provided in the pixel 13 also include amorphous silicon thin film transistors.

On the opposite side of the shutter electrode 26 from the glass substrate 36, a light guide 22 including a light source 42 including independent LED light sources for three colors R (red), G (green), and B (blue) is provided. Reflection films 21 and 23 are provided on both surfaces of the light guide 22. In particular, the reflection film 23 on the shutter electrode 26 side includes a multilayer dielectric film. The multilayer dielectric film included in the reflection film 23 has a laminated structure of a high-refractive index material such as $TiO_2$ or $Ta_2O_3$ and a low-refractive index material such as $SiO_2$ or $MgF_2$. The thicknesses of films of the laminated structure are designed to appropriate values, whereby it is possible to obtain sufficient total reflection characteristics in practice with respect to emitted lights of the independent LED light sources for R (red), G (green), and B (blue) included in the light source 42. A problem in using the multilayer dielectric film as a total reflection film, when the multilayer dielectric film is optimally designed for light made incident in the vertical direction, a reflection characteristic is deteriorated with respect to light made incident at an angle close to the horizontal. When light is transmitted through the reflection film 23, a light leak of the display device occurs, leading to marked deterioration in contrast. Therefore, in order to prevent such a light leak, a black resin film 24 formed of an organic material is further formed on the reflection film 23. The black resin film 24 can be formed by appropriately dispersing pigment particles such as carbon black or titanium black in polyimide resin or the like. In the reflection film 23 and the black resin film 24, as shown in Fig. 4, an opening is provided in a position corresponding to the shutter electrode 26.

A part of light 41 emitted from the light source 42 and propagated through the light guide 22 is emitted from the opening. The opening can be collectively processed and formed by photolithography using the black resin film 24 as a mask.

On the opposite side of the glass substrate 36 from the light guide 22, a touch panel 30 including a film sheet 38, a sense electrode 40, and a protective film 39 is provided. The sense electrode 40 of the touch panel 30 is connected to a circuit for touch detection in the periphery of the display region. However, since the configuration of this portion is the generally-known technique, detailed explanation of the touch panel 30 is omitted.

The operation of the shutter control circuit 18 in the first embodiment explained with reference to Fig. 3 is explained below. Fig. 5 is an operation timing chart of the shutter control circuit 18 in the first embodiment. The abscissa indicates time and the ordinate indicates voltages of the sections. In particular, a voltage value of the shutter electrode 26 of the dual actuator shutter assembly 1 described at the bottom takes two values of about 0 (V) and about $V_h$ according to image signals. Therefore, to facilitate understanding of the drawing, the former value is indicated by a solid line and the latter value is indicated by a broken line.

Before timing t1

In this period, writing of an image signal voltage to the pixel is performed. In this period, the high voltage $V_h$ and the low voltage 0 (V) are respectively applied to the control electrode lines 8A and 8B. However, as explained below, for the purpose of polarity inversion driving of the shutter electrode 26, values of applied voltages to the control electrode lines 8A and 8B equivalent to odd number pixel columns and even number pixel columns interchange for each frame. The scanning switches 5 of the pixels are sequentially scanned by the scanning lines 10. A predetermined image signal voltage is written from the signal lines 6A and 6B in the signal storage capacitor 4 of the pixel in which the scanning switch 5 is scanned. The image signal voltage applied to the signal lines 6A and 6B takes two values of, for example, 7 (V) and 0 (v). 7 (V) and 0 (V) to which the image signal voltage corresponds respectively in white display time and black display time interchange for each column of the signal lines 6A and 6B according to values for each frame of the applied voltages to the control electrode lines 8A and 8B for the polarity inversion driving of the shutter electrode 26. 0 (V) is applied to the capacity line 11 and $V_m$ is applied to the source voltage line for writing shutter voltage 12. About 0 (V) or about $V_h$ is applied to the shutter electrode 26 of the dual actuator shutter assembly 1. A value of $V_h$ is designed to a minimum voltage at which electrostatic mechanical driving of the dual actuator shutter assembly 1 is possible. For example, this value is 20 (V). A value of $V_m$ is a value at which the shutter voltage writing transistor 3 is not turned on even if a signal voltage is written in the signal storage capacitor 4. For example, the value is 7 (V).

Timing t1 to timing t2

In this period, for the purpose of the polarity inversion driving of the shutter electrode 26, the interchange of the applied voltages to the control electrode lines 8A and 8B equivalent to the odd number pixel column and the even number pixel column is performed for each frame. In this embodiment, as explained below, time weight is given to light emission of the light source 42 for each sub-field. PWM (Pulse Width Modulation) driving for controlling light emission to the outside is performed according to the opening and closing of the shutter electrode 26. However, the interchange of the applied voltages to the control electrode lines 8A and 8B may be performed for each sub-field or each plural sub-fields instead of each frame. In a sub-field in which the interchange of the applied voltages to the control electrode lines 8A and 8B is not performed, it is unnecessary to provide the period of [timing t1 to timing t2]. When the interchange of the applied voltages to the control electrode lines 8A and 8B is frequently performed, it is necessary to frequently provide a transition period from timing t1 to timing t2 involved in the interchange of the applied voltages and take notice of an increase in power consumption.

Timing t2 to timing t3

In this period, the signal voltage writing to the shutter electrodes 26 is performed in all the pixels all at once on the basis of the image signal voltage written in the signal storage capacitor 4. $V_h$ is simultaneously written in the capacity line 11 and the source voltage line for writing shutter voltage 12. Thereafter, the voltages of both of the capacity line 11 and the source voltage line for writing shutter voltage 12 are dropped to 0 (V). The shutter voltage writing transistor 3 is controlled by this operation. When the image signal voltage written in the signal storage capacitor 4 is 0 (V), $(V_h-V_{th})$ is written to the shutter electrode 26 as a signal voltage. When the image signal voltage is 7 (V), 0 (V) is written to the shutter electrode 26 as a signal voltage. $V_{th}$ is a threshold voltage of the shutter voltage writing transistor 3.

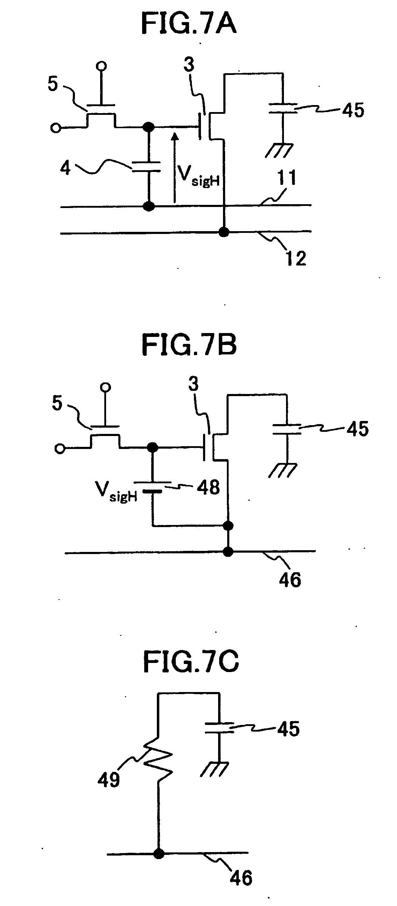

The signal voltage writing to the shutter electrodes 26 is explained in detail below with reference to Figs. 6A to 6C and Figs. 7A to 7C.

Figs. 6A to 6C are explanatory diagrams of writing the signal voltage to the shutter electrode 26 when the initial image signal voltage written in the signal storage capacitor 4 is 0 (V). Figs. 6A shows a pixel equivalent circuit formed when 0 (V) is written in the signal storage capacitor 4 in the beginning of this period. An equivalent input capacitor 45 of the shutter electrode 26 is shown instead of the shutter electrode 26. When a state in which the capacity line 11 and the source voltage line for writing shutter voltage 12 are simultaneously operated in this period is considered, as indicated by an equivalent circuit shown in Fig. 6B, the signal storage capacitor 4 in which 0 (V) is written can be regarded as equivalent to short circuit and the capacity line 11 and the source voltage line for writing shutter voltage 12 can be collectively regarded as one equivalent wire 46. Then, since the shutter voltage writing transistor 3 is a diode-connected transistor, as indicated by an equivalent circuit shown in Fig. 6C, the entire equivalent circuit can be regarded as a configuration in which the equivalent input capacitor 45 of the shutter electrode 26 is connected to the equivalent wire 46 via an equivalent diode 47 of the shutter voltage writing transistor 3. When the equivalent circuit shown in Fig. 6C is used, it is possible to easily explain that, when $V_h$ is simultaneously written in the capacity line 11 and the source voltage wire for writing shutter voltage 12, even if the equivalent diode 47 is turned on and $(V_h-V_{th})$ is written in the equivalent input capacitor 45 as a signal voltage and, thereafter, 0 (V) is simultaneously written in the capacity line 11 and the source voltage line for writing shutter voltage 12, the shutter electrode 26 retains $(V_h-V_{th})$ as the signal voltage.

Figs. 7A to 7C are explanatory diagrams of writing the signal voltage to the shutter electrode 26 when the initial image signal voltage written in the signal storage capacitor 4 is 7 (V). Fig. 7A shows a pixel equivalent circuit formed when 7 (V) (in Figs. 7A to 7C, for generalization, described as $V_{sigH}$) is written in the signal storage capacitor 4 in the beginning of this period. As in the case shown in Fig. 6A, the equivalent input capacitor 45 of the shutter electrode 26 is shown instead of the shutter electrode 26. When a state in which the capacity line 11 and the source voltage line for writing shutter voltage 12 are simultaneously operated in this period is considered, as indicated by an equivalent circuit shown in Fig. 7B, the signal storage capacitor 4 in which 7 (V) is written can be regarded as equivalent to a direct-current power supply 48 of 7 (V) and the capacity line 11 and the source voltage line for writing shutter voltage 12 can be collectively regarded as one equivalent wire 46. Then, since the shutter voltage writing transistor 3, to a gate of which the direct-current power supply 48 of 7 (V) is connected, is always on, the shutter voltage writing transistor 3 can be regarded as an equivalent resistor 49. Therefore, as indicated by an equivalent circuit shown in Fig. 7C, the entire equivalent circuit can be regarded as a configuration in which the equivalent input capacitor 45 of the shutter electrode 26 is connected to the equivalent wire 46 via the equivalent resistor 49 of the shutter voltage writing transistor 3. When the equivalent circuit shown in Fig. 7C is used, it is possible to easily explain that, when $V_h$ is simultaneously written in the capacity line 11 and the source voltage wire for writing shutter voltage 12, $V_{th}$ is once written in the equivalent input capacitor 45 of the shutter electrode 26 as a signal voltage through the equivalent resistor 49 and, thereafter, when 0 (V) is simultaneously written in the capacity line 11 and the source voltage line for writing shutter voltage 12, 0 (V) is written again in the equivalent input capacitor 45 of the shutter electrode 26 through the equivalent resistor 49.

Such a signal writing circuit including the shutter voltage writing transistor 3 and the signal storage capacitor 4 is herein referred to as pseudo diode circuit.

Timing t3 to timing t4

In this period, the capacity line 11 and the source voltage line for writing shutter voltage 12 maintain the voltage value dropped to 0 (V). When 0 (V) is written to the shutter electrode 26, the voltage converges to about 0 (V) in this period.

After timing t4

In this period, as in the operation performed before timing t1, writing of an image signal voltage to the pixel is performed again. The scanning switches 5 of the pixels are sequentially scanned by the scanning lines 10. The predetermined image signal voltage is written from the signal lines 6A and 6B in the signal storage capacitor 4 of the pixel in which the scanning switch 5 is scanned. $V_m$ is applied to the source voltage line for writing shutter voltage 12. Even if a signal voltage is written in the signal storage capacitor 4, basically, the shutter voltage writing transistor 3 is not turned on.

However, when 0 (V) is written to the shutter electrode 26 and 7 (V) ($V_{sigH}$) is written in the signal storage capacitor 4, it is necessary to take note that the voltage of the shutter electrode 26 rises again to $7(V)-V_{th}(V_{sigH}-V_{th})$, which is a voltage at which the shutter voltage writing transistor 3 is turned off, in this period. Since the shutter electrode 26 is basically binary-driven, even if the voltage rises from 0 (V) to $7(V)-V_{th}(V_{sigH}-V_{th})$, the operation itself is not seriously hindered. However, an operation margin tends to decrease because of the rise in the temperature. There is an advantage that it is possible to further increase the speed of the writing operation in the equivalent input capacitor 45 of the shutter electrode 26 by the shutter voltage writing transistor 3 when $V_{sigH}$ is higher. However, on the other hand, there are also side effects in that power consumption increases when $V_{sigH}$ is written in the signal lines 6A and 6B from the image signal voltage writing circuit 14 and that, when 0 (V) is written to the shutter electrodes 26 as explained above, the voltage of the shutter electrodes 26 rises again to $7 (V) -V_{th}(V_{sigH}-V_{th})$, which is a voltage at which the shutter voltage writing transistor 3 is turned off. Therefore, in this embodiment, it is necessary to optimally set, taking these into account, the voltage value of $V_{sigH}$ set to 7 (V).

The operation of the pixel peripheral circuit in the first embodiment explained with reference to Fig. 2 is explained. In a writing period of an image signal voltage in the pixel equivalent to [before timing t1] explained above, the scanning lines 10 are sequentially scanned by the scanning circuits 15 and, in synchronization with the scanning, an image signal voltage is written in the signal lines 6A and 6B from the image signal voltage writing circuit 14. As explained above, time weight is given to light emission of the light source 42 for each sub-field. PWM driving for controlling light emission to the outside is performed according to the opening and closing of the shutter electrode 26. Therefore, the image signal voltage written in the signal lines 6A and 6B from the image signal voltage writing circuit 14 is, for example, binary voltages of 0 (V) and 7 (V). A signal voltage applied to the shutter electrode 26 provided in the pixels is controlled according to the image signal voltage. As explained above, 7 (V) and 0 (V) to which the image signal voltage corresponds respectively in white display time and black display time interchange for each column of the signal lines 6A and 6B according to values for each frame of the applied voltages to the control electrode lines 8A and 8B for the polarity inversion driving of the shutter electrode 26. Subsequently, as explained above, after the writing of the image signal voltage in all the pixels ends, in the period of [timing t1 to timing t2], for the purpose of the polarity inversion driving of the shutter electrode 26, the applied voltages to the control electrode lines 8A and 8B equivalent to the odd number pixel column and the even number pixel column are complementarily driven by the control electrode driving circuit 17. The signal voltage writing to the shutter electrodes 26 in all the pixels based on the image signal voltage written in the signal storage capacitor 4 in [timing t2 to timing t3] to be subsequently performed is performed by the writing driving circuit 16 driving the capacity lines 11 and the source voltage lines for writing shutter voltage 12 all at once. Thereafter, in [after timing t4], the writing driving circuit 16 performs application of $V_m$ to the source voltage lines for writing shutter voltage 12.

Finally, the operation of the structure in the vicinity of the shutter electrode 26 in the first embodiment explained with reference to Fig. 4 is explained. After the writing end of the image signal voltage in the pixels equivalent to [before timing t1] explained above, in the period of [timing t1 to timing t2], the applied voltages to the control electrode lines 8A and 8B equivalent to the odd number pixel columns and the even number pixel columns are controlled for each frame period. These voltages are respectively applied to the control electrodes 25 and 27 of the dual actuator shutter assembly 1. For example, in a certain frame, 0 (V) is applied to the control electrode 25 and $V_h$ (e.g., 20 (V)) is applied to the control electrode 27. Subsequently, according to the signal voltage writing operation to the shutter electrode 26 in the period of [timing t2 to timing t3], about $V_h$ (e.g., 20 (V))) or about 0 (V) is written to the shutter electrode 26. 0 (V) is applied to the control electrode 25 and $V_h$ (e.g., 20 (V)) is applied to the control electrode 27. Therefore, according to the effect of a field effect generated by the shutter electrode 26 and the control electrodes 25 and 27, when

about $V_h$ (e.g., 20 (V)) is written to the shutter electrode 26, the position of the shutter electrode 26 is stabilized on the opening of the reflection film 23 and the black resin film 24. When about 0 (V) is written to the shutter electrode 26, the position of the shutter electrode 26 is stabilized on the light blocking part of the reflection film 23 and the black resin film 24. Consequently, when about $V_h$ (e.g., 20 (V)) is written to the shutter electrode 26, even if the light 41 emitted from the light source 42 and propagated through the light guide 22 is emitted from the opening, the light 41 is reflected by the shutter electrode 26 to be returned to the light guide 22. Therefore, the pixel is observed as being in a non-light emission state. When about 0 (V) is written to the shutter electrode 26, the light 41 emitted from the light source 42 and propagated through the light guide 22 is emitted from the opening. Therefore, the pixel is observed as being in a light emission state.

In the next frame, the polarities of the image signal voltage of the control electrodes 25 and 27 are inverted. Specifically, $V_h$ (e.g., 20 (V)) is applied to the control electrode 25 and 0 (V) is applied to the control electrode 27. Therefore, when about 0 (V) is written to the shutter electrode 26, even if the light 41 emitted from the light source 42 and propagated through the light guide 22 is emitted from the opening, the light 41 is reflected by the shutter electrode 26 to be returned to the light guide 22. Therefore, the pixel is observed as being in the non-light emission state. When about $V_h$ (e.g., 20 (V)) is written to the shutter electrode 26, the light 41 emitted from the light source 42 and propagated through the light guide 22 is emitted from the opening. Therefore, the pixel is observed as being in the light emission state. By performing the polarity inversion driving of the shutter electrode 26 in this way, it is possible to convert an electric field applied to the insulating films on the surfaces of the shutter electrode 26, the control electrodes 25 and 27 into an alternating electric field. Therefore, it is possible to further improve electric stability of these electrodes.

As explained above, in this embodiment, time weight is given to light emission of the light source 42 for each sub-field. PWM driving for controlling light emission to the outside is performed according to the opening and closing of the shutter electrode 26. Specifically, time weight of 2 to the n-th power is given to a light emission period of the independent LED light sources for three colors R (red), G (green), and B (blue) included in the light source 42. The time weight is combined with the opening and closing control of the shutter electrode 26 of each of the pixels to realize gradation light emission by a PWM system and, at the same time, realize color display by an FSC system. Such lighting of the light source 42 is performed within writing periods of the image signal voltage in the pixel in [before timing t1] and [after timing t4].

As explained above, by performing writing of a signal voltage to the shutter electrode 26, it is possible to reduce wires in the pixel. Consequently, it is possible to increase yield in mass production and realize a reduction in cost.

When a predetermined high voltage or a predetermined low voltage is selectively applied to the mechanical shutter according to an image signal, if an electric field is generated between the mechanical shutter and the light blocking film, the electric field is modulated according to the image signal. Therefore, it is likely that the operation margin of the mechanical shutter is markedly impaired. In this embodiment, since the light blocking film is formed of the dielectric, it is possible to prevent an electric field from being generated between the mechanical shutter and the light blocking film and realize an ideal light blocking film that can realize high contrast without impairing the operation margin of the mechanical shutter.

In this embodiment, the driving of the control electrodes 25 and 27 involved in the polarity inversion driving is converted into alternating driving as explained above and the driving of the control electrode 25 and the driving of the control electrode 27 cancel each other. Therefore, in particular, there is a characteristic that EMI (Electro-Magnetic Interference) is small. According to the characteristic, it is possible to suppress noise dive to the sense electrode 40 of the touch panel 30 provided on the glass substrate 36. In particular, it is possible to realize a touch panel characteristic with high sensitivity. In this embodiment, the capacity line 11 and the source voltage line for writing shutter voltage 12 cannot be converted into alternating lines yet. However, writing driving to the shutter electrode 26 via the shutter voltage writing transistor 3 controlled by waveforms of the lines originally has a large time constant. Therefore, it is possible to suppress EMI due to the capacity line 11 and the source voltage line for writing shutter voltage 12 is possible by setting a sufficiently large driving time constant of the capacity line 11 and the source voltage line for writing shutter voltage 12 by the writing driving circuit 16.

In this embodiment, the polarity inversion driving is realized by the interchange of the applied voltages to the control electrode lines 8A and 8B. However, in general, the parasitic capacitance of the control electrodes 25, 27 connected to the control electrode lines 8A and 8B is small compared with the parasitic capacitance of the shutter electrode 26. In this embodiment, it is unnecessary to control the shutter electrode 26 when the polarity inversion driving is performed. Therefore, from this view point, it is seen that this embodiment has an advantage that it is possible to suppress power consumption and EMI during the polarity inversion driving.

In this embodiment, a period in which the scanning switch 5 and the shutter voltage writing transistor 3 are turned on is limited to a period in which the pixel is selected by the scanning line 10 and the period of [timing t2 to timing t4], which is a signal voltage writing period to the shutter electrode 26. Consequently, this embodiment has a characteristic that it is possible to sufficiently prevent a shift of a threshold voltage caused because an ON period of these amorphous silicon thin film transistors continues for a long time.

Various alterations of the technique disclosed in this embodiment are possible without departing from the spirit of the present invention. In this embodiment, the scanning switch 5 and the shutter voltage writing transistor 3 are provided on the glass substrate 36 as the n-type amorphous silicon thin film transistors. However, if a heat resistant plastic substrate or the like is used instead of the glass substrate 36, it is possible to impart flexibility against bending to the substrate. If n-type or p-type polycrystal silicon thin film transistors capable of operating at a lower voltage is used instead of the n-type amorphous silicon thin film transistors, it is possible to reduce the amplitude of the image signal voltage output from the image signal voltage writing circuit 14 to the signal lines 6A and 6B to be equal to or lower than 5 V to realize a reduction in power consumption. It goes without saying that, when the p-type thin film transistors are used, it is unnecessary to invert the relation of positive and negative of voltages applied to the transistors. Further, if amorphous oxide thin film transistors represented by InGaZnO are used instead of the n-type amorphous thin film transistors, it is also possible to reduce the amplitude of the image signal voltages to be equal to or lower than 5 V to realize a reduction in power consumption and reduce process apparatus costs compared with the costs for the polycrystal silicon thin film transistors. It goes without saying that, when the n-type thin film transistors are changed to the p-type thin film transistors, the source and the drain to be connected are interchanged.

In this embodiment, the black resin film formed by appropriately dispersing pigment particles such as carbon black or titanium black in polyimide resin is used as the black resin film 24. However, the black resin film is not limited to this. The black resin film only has to be a dielectric in order to prevent the influence of an electric filed on the shutter electrode 26. Further, depending on a wavelength characteristic of light transmitted through the reflection film 23, a resin film does not need to be black. For example, a blue resin layer may be used instead of the black resin film 24 as long as an amount of blue included in the light transmitted through the reflection film 23 is substantially negligible. A cyan resin layer may be used instead of the black resin film 24 as long as amounts of colors other than red included in the light transmitted through the reflection film 23 are negligible. When the entire light guide 22 can be optically designed such that an angle of incident light on the reflection film 23 does not exceed an appropriate range or when a total reflection characteristic of a reflection film can be sufficiently secured over an entire necessary incident angle region, the black resin film 24 itself is unnecessary.

In this embodiment, the reflection film 23 on the shutter electrode 26 side is formed using the multilayer dielectric film. However, characteristics necessary for the reflection film 23 are that the reflection film 23 is a dielectric in order to prevent the influence of an electric field on the shutter electrode 26 and reflects, at high efficiency, the lights including the lights of the three colors R (red), G (green), and B (blue) generated from the light source 42 and irradiated from the light guide 22. Therefore, the reflection film 23 is not always limited to the multilayer dielectric film as long as the reflection film 23 satisfies such characteristics. The reflection on the reflection film 23 is not limited to specular reflection. Since the reflection film 23 may be a film having a diffuse reflection characteristic, it is also possible to form the reflection film 23 using a white resin material or the like.

In this embodiment, the polarity inversion driving of the shutter electrode 26 is performed for each column. However, the polarity inversion driving does not always have to be performed for each column and can also be performed for, for example, each row or each dot lattice as long as the control electrode lines 8A and 8B are appropriately arranged in each of the pixels. If the insulating films on the surfaces of the shutter electrode 26 and the control electrodes 25 and 27 have sufficient electric stability, the polarity inversion driving itself does not have to be performed.

[Second Embodiment]

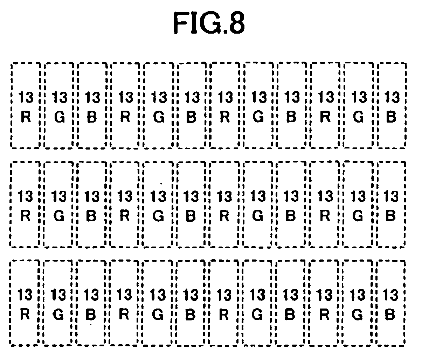

The configuration and the operation in a second embodiment of the present invention are explained in order below with reference to Figs. 8 and 9. The system configuration and the operation of an image display device according to the second embodiment, the configuration and the operation of a display panel, the configuration and the operation of pixels, and the like are the same as those in the first embodiment explained above. Therefore, explanation of the configurations and the operations is omitted and differences from the first embodiment are explained below.

Fig. 8 is a configuration diagram of a pixel array in a display region in the image display device according to the second embodiment. Pixels 13R, 13G, and 13B are provided in a matrix shape in the display region. The pixels 13R, 13G, and 13B arrayed in the column direction respectively emit lights in the colors R (red), G (green), and B (blue).

The sectional structure of a pixel section in the second embodiment is explained. Fig. 9 is a diagram showing the sectional structure of the pixel 13R in the second embodiment. The configuration and the operation of the pixel 13R shown in the figure are basically the same as the configuration and the operation in the first embodiment explained with reference to Fig. 4. However, in the pixel 13R in the second embodiment, a reflection film 50 includes a laminated layer of a multilayer dielectric film 50R that totally reflects R (red), a multilayer dielectric film 50G that totally reflects G (green), and a multilayer dielectric film 50B that totally reflects B (blue). A light source 52 including an LED light source for W (white) is provided instead of the light source 42 including the independent LED light source for the three colors R (red), G (green), and B (blue).

Further, in an opening of the reflection film 50, the multilayer dielectric film 50R that totally reflects R (red) is not provided and an R (red) color filter 51 including a laminated structure of the multilayer dielectric film 50G that totally reflects G (green) and the multilayer dielectric film 50B that totally reflects B(blue) is provided. Consequently, the pixel 13R in the second embodiment has a characteristic that the R (red) light is emitted but the G (green) and B (blue) lights are reflected in the direction of the light guide 22 by the R (red) color filter 51 and recycled.

Similarly, in the pixel 13G, in the opening of the reflection film 50, the multilayer dielectric film 50G that totally reflects G (green) is not provided and a G (green) color filter including a laminated structure of the multilayer dielectric film 50B that totally reflects B (blue) and the multilayer dielectric film 50R that totally reflects R (red) is provided. Consequently, in the pixel 13G, the G (green) light is emitted but the B (blue) and R (red) lights are reflected in the direction of the light guide 22 by the G (green) color filter and recycled.

Similarly, in the pixel 13B, in the opening of the reflection film 50, the multilayer dielectric film 50B that totally reflects B (blue) is not provided and a B (blue) color filter including a laminated structure of the multilayer dielectric film 50R that totally reflects R (red) and the multilayer dielectric film 50G that totally reflects G (green) is provided. Consequently, in the pixel 13B, the B (blue) light is emitted but the R (red) and G (green) lights are reflected in the direction of the light guide 22 by the B (blue) color filter and recycled.

In the second embodiment, as explained above, the light source 52 including the LED light source for W (white) is provided and the pixels are divided into the pixels 13R, 13G, and 13B for the three colors. Therefore, it is possible to use a white light emission and color filter system for color display rather than the FSC system. Consequently, in the second embodiment, it is possible to completely prevent color break-up that poses a problem in the FSC system. In this case, a dichroic color filter provided in each of the pixels reflects lights having wavelengths other than selected transmission wavelength in the direction of the light guide 22 and recycles the lights. Therefore, there is no loss of the lights due to light absorption caused when a general color filter is used. It is possible to realize a reduction in power consumption. The light source 52 including the LED light source for W (white) usually used in the general television or the like is used instead of the light source 42 including the independent LED light sources for R (rd), G (green), and B (blue). Therefore, it is possible to realize a reduction in costs of LED light source components. This is because, since the LED light source for W (white) can be formed of a blue LED and a yellow phosphor, material costs are low and volume efficiency due to mass production can also be expected.

In this embodiment, as in the first embodiment, it is possible to reduce wires in the pixel, increase the yield in mass production, and realize a reduction in cost. Since the light blocking film is formed of the dielectric, it is possible to prevent an electric field from being generated between the mechanical shutter and the light blocking film and realize high contrast without impairing the operation margin of the mechanical shutter.

[Third Embodiment]

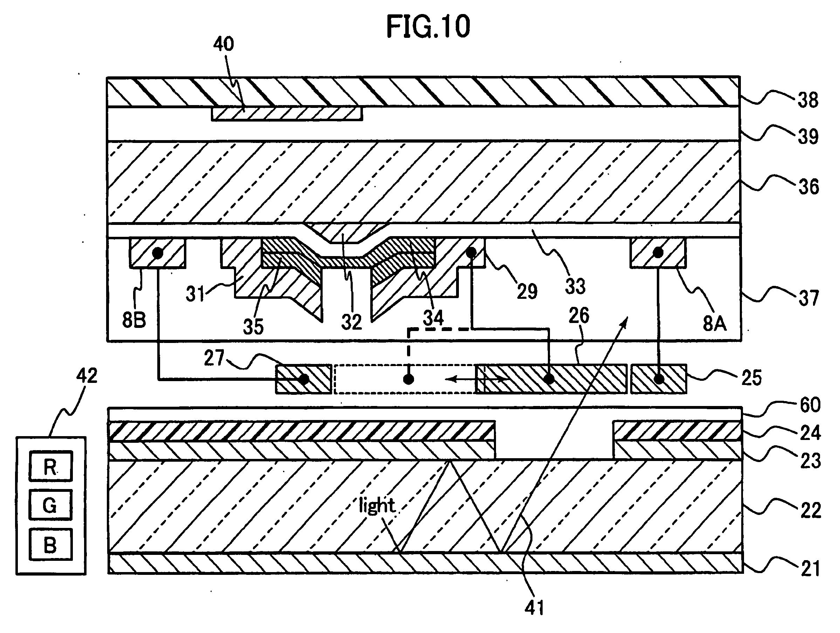

The configuration and the operation in a third embodiment of the present invention are explained in order below with reference to Fig. 10. The system configuration and the operation of an image display device according to the third embodiment, the configuration and the operation of a display panel, the configuration and the operation of pixels, and the like are the same as those in the first embodiment explained above. Therefore, explanation of the configurations and the operations is omitted and differences from the first embodiment are explained below.

Fig. 10 is a diagram showing the sectional structure of the pixel 13 in the third embodiment. The configuration and the operation of the pixel 13 shown in the figure are basically the same as the configuration and the operation in the first embodiment explained with reference to Fig. 4. However, the pixel 13 in the third embodiment is different in that the reflection film 23 and the black resin film 24 are covered with a transparent protective film 60. As the transparent protective film 60, an organic or inorganic protective film can be used.

In the third embodiment, by using the transparent projective film 60, it is possible to prevent foreign matters from being formed even if the moving shutter electrode 26 comes into contact with the transparent protective film 60. As a result, it is possible to design a distance between the shutter electrode 26 and the reflection film 23 and black resins film 24 short. When the shutter electrode 26 is in the closed state, unless the opening of the reflection film 23 and the black resin film 24 is sufficiently shielded from light by the shutter electrode 26, contrast is deteriorated because of a light leak. Therefore, by designing the distance between the shutter electrode 26 and the reflection film 23 and black resin film 24 short in this way, in the third embodiment, it is possible to substantially realize improvement of contrast.

In this embodiment, as in the first embodiment, it is possible to reduce wires in the pixel, increase the yield in mass production, and realize a reduction in cost. Since the light blocking film is formed of the dielectric, it is possible to prevent an electric field from being generated between the mechanical shutter and the light blocking film and realize high contrast without impairing the operation margin of the mechanical shutter.

[Fourth Embodiment]

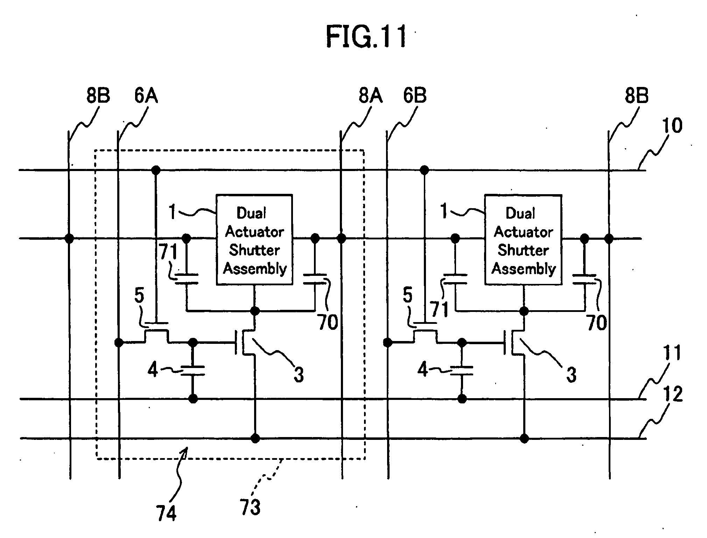

The configuration and the operation in a fourth embodiment of the present invention are explained in order below with reference to Fig. 11. The system configuration and the operation of an image display device according to the fourth embodiment, the configuration and the operation of a display panel, the configuration and the operation of pixels, and the like are the same as those in the first embodiment explained above. Therefore, explanation of the configurations and the operations is omitted and differences from the first embodiment are explained below.

Fig. 11 is a diagram showing a shutter control circuit of an image display device employing a mechanical shutter according to the fourth embodiment. A pixel 73 in the fourth embodiment is different from the pixel 13 in the first embodiment in that the drain of the shutter voltage writing transistor 3 is connected to the shutter electrode 26 of the dual actuator shutter assembly 1 and, in addition, auxiliary capacitors 70 and 71 are respectively provided anew between the shutter electrode 26 and the control electrodes 25 and 27 of the dual actuator shutter assembly 1.

As explained in the first embodiment, the position of the shutter electrode 26 is controlled according to the effect of the electric field generated by the shutter electrode 26 and the control electrodes 25 and 27. However, it is desirable to continue to supply necessary charges to the shutter electrode 26 until the position of the shutter electrode 26 is stabilized on the side of the control electrode 25 or 27. Parasitic capacitance is always formed between the shutter electrode 26 and the control electrodes 25 and 27. However, a value of the parasitic capacitance increases when the shutter electrode 26 moves and the space between the shutter electrode 26 and the control electrode 25 or 27 decreases. When the parasitic capacitance in a certain distance between the shutter electrode 26 and the control electrode 25 or 27 is represented as C, an increment of the parasitic capacitance due to subsequent position fluctuation of the shutter electrode 26 is represented as $\Delta C$, a voltage is represented as V, and charges accumulated in the parasitic capacitance in this distance are represented as Q, and an increment of the charges due to subsequent position fluctuation of the shutter electrode 26 is represented as $\Delta Q$, Expression (1) below holds.

$$(Q + \Delta Q) = (C + \Delta C) \times V \qquad (1)$$

Therefore, in order to keep the voltage V between the shutter electrode 26 and the control electrode 25 or 27 constant, it is necessary to supply the charges $\Delta Q$ equivalent to the increment $\Delta C$ of the value of the parasitic capacitance C.

This means that it is necessary to keep the shutter voltage writing transistor 3 on until the position of the shutter electrode 26 settles in a stabilization point. However, in this case, the periods of [timing t2 to timing t3] and [timing t3 to timing t4] shown in Fig. 5 are secured sufficiently long. The writing periods of the image signal voltage in the pixel in [before timing t1] and [after timing t4] decrease. In particular, when it is necessary to design a display having a large number of pixels in the column direction, this limitation is extremely strict.

On the other hand, in the fourth embodiment, the auxiliary capacitors 70 and 71 are respectively provided anew between the shutter electrode 26 and the control electrodes 25 and 27 of the dual actuator shutter assembly 1 to make it possible to supply charges from the auxiliary capacitors 70 and 71 to the parasitic capacitance. As a result, the influence of the parasitic capacitance in the shutter electrode 26 is relaxed.

Consequently, in the fourth embodiment, even if the shutter voltage writing transistor 3 is turned off before the position of the shutter electrode 26 completely settles at the stabilization point, it is possible to sufficiently suppress voltage fluctuation between the shutter electrode 26 and the control electrodes 25 and 27 due to an increase in the parasitic capacitance. Therefore, the periods of [timing t2 to timing t3] and [timing t3 to timing t4] shown in Fig. 5 do not have to be secured sufficiently long. It is possible to sufficiently secure the writing periods of the image signal voltage in the pixel in [before timing t1] and [after timing t4]. In particular, when a display having a large number of pixels in the column direction is designed, it is possible to reduce a driving clock of the scanning circuit 15. This is a significant advantage in realizing improvement of the yield and a reduction in power consumption through securing of a circuit design margin.

In the fourth embodiment, the capacitances of the auxiliary capacitors 70 and 71 are designed to 200 fF. However, from the viewpoint of the effect explained above, for example, the capacitances are desirably equal to or higher than 10 fF. In the fourth embodiment, the capacitances of the auxiliary capacitors 70 and 71 are set to the same value. This is because, in the period of [timing t1 to timing t2], when the interchange of the applied voltages to the control electrode lines 8A and 8B equivalent to the odd number pixel column and the even number pixel column is performed for each frame for the purpose of the polarity inversion driving of the shutter electrode 26, voltage fluctuations of the control electrode lines 8A and 8B caused by the interchange cancel each other not to affect the shutter electrode 26 through the coupling of the auxiliary capacitors 70 and 71. However, it is evident that, when this coupling effect does not pose a problem, an effect same as the effect in the fourth embodiment can be obtained even if the capacitances of the auxiliary capacitors 70 and 71 are set asymmetry or only one of the auxiliary capacitors 70 and 71 is provided.

In this embodiment, as in the first embodiment, it is possible to reduce wires in the pixel, increase the yield in mass production, and realize a reduction in cost. Since the light blocking film is formed of the dielectric, it is possible to prevent an electric field from being generated between the mechanical shutter and the light blocking film and realize high contrast without impairing the operation margin of the mechanical shutter.

[Fifth Embodiment]

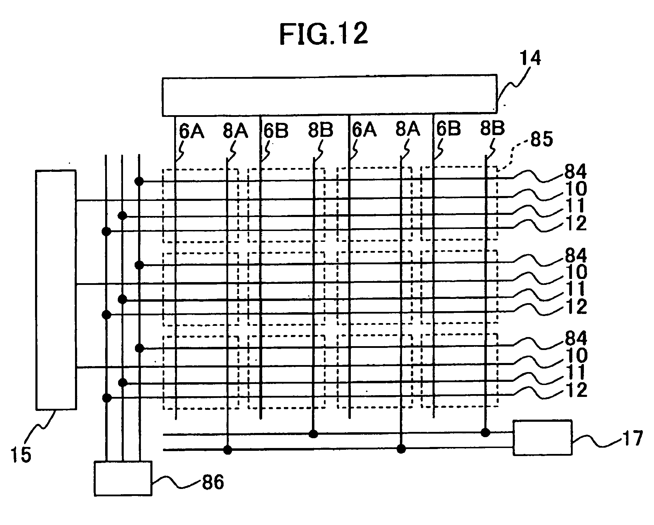

The configuration and the operation in a fifth embodiment of the present invention are explained in order below with reference to Figs. 12 to 15.

Fig. 12 is a pixel peripheral circuit diagram of an image display device according to the fifth embodiment. Pixels 85 arrayed in a matrix shape form a display region. In the pixels 85, the signal lines 6A and 6B and the control electrode lines 8A and 8B are provided in the column direction and the scanning lines 10, the capacity lines 11, the source voltage lines for writing shutter voltage 12, and pMOS source voltage lines for writing CMOS shutter voltage 84 are provided in the row direction. In the periphery of the display region, one ends of the signal lines 6A and 6B are connected to the image signal voltage writing circuit 14 and one ends of the control electrode lines 8A and 8B are connected to the control electrode driving circuit 17. One ends of the scanning lines 10 are connected to the scanning circuit 15 and one ends of the capacity lines 11, the source voltage lines for writing shutter voltage 12, and the pMOS source voltage lines for writing CMOS shutter voltage 84 are connected to a writing driving circuit 86.

$V_h$ (e.g., 15 (V) as explained below) is always input to the pMOS source voltage lines for writing CMOS shutter voltage 84 from the writing driving circuit 86. In Fig. 12, for simplification, the display region is shown as a matrix of 4x3 pixels. However, the technical idea disclosed by the present invention does not specifically limit the number of pixels.

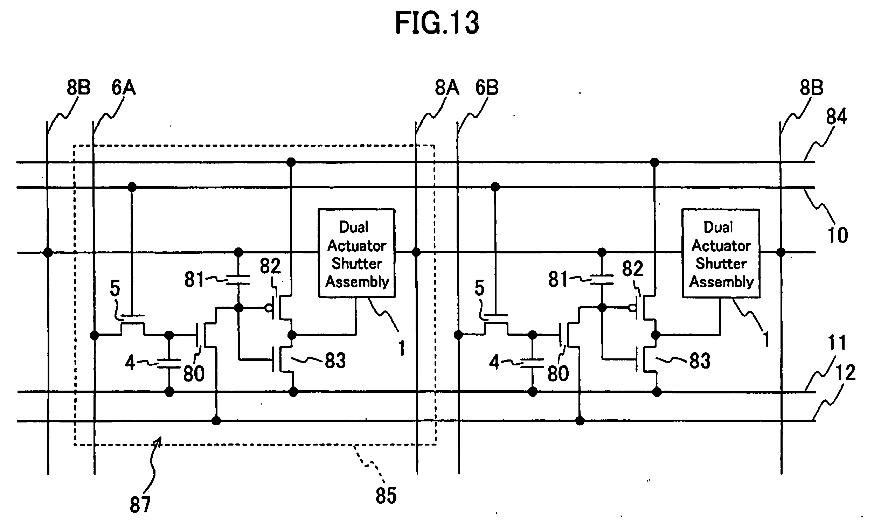

In Fig. 13, a shutter control circuit 87 in each of the pixels 85 shown in Fig. 12 is shown. The signal line 6A is provided in each of the pixels 85. The signal line 6A and the signal storage capacitor 4 are connected by the scanning switch 5. The signal storage capacitor 4 is further connected to a gate of a transistor for CMOS writing 80. A drain of the transistor for CMOS writing 80 is connected to one end of a CMOS signal storage capacitor 81. The drain of the transistor for CMOS writing 80 is also connected to gates of an CMOS shutter voltage writing nMOS transistor 83 and a CMOS shutter voltage writing pMOS transistor 82. Further, drains of the CMOS shutter voltage writing nMOS transistor 83 and the CMOS shutter voltage writing pMOS transistor 82 are connected to the shutter electrode 26 of the dual actuator shutter assembly 1. Consequently, the CMOS shutter voltage writing nMOS transistor 83 and the CMOS shutter voltage writing pMOS transistor 82 form a CMOS inverter circuit in the pixel 85. One of the two control electrodes of the dual actuator shutter assembly 1 is connected to the control electrode line 8A in the pixel 85. The other control electrode is connected to the control electrode line 8B of the pixel 85 adjacent to the pixel 85. The other end of the signal storage capacitor 4 is connected to the capacity line 11. The other end of the CMOS signal storage capacitor 81 is connected to the control electrode line 8B. A source of the transistor for CMOS writing 80 is connected to the source voltage line for writing shutter voltage 12. Sources of the CMOS shutter voltage writing nMOS transistor 83 and the CMOS shutter voltage writing pMOS transistor 82 are respectively connected to the capacity line 11 and the pMOS source voltage line for writing CMOS shutter voltage 84. The gate of the scanning switch 5 is connected to the scanning line 10. A three-dimensional pixel structure in which, for example, the dual actuator shutter assembly 1 is provided to be opposed to an opening provided on a light blocking surface is basically the same as the pixel structure in the first embodiment. In Fig. 13, two pixels 85, i.e., the pixel 85 including the signal line 6A and the control electrode line 8A and the pixel 85 including the signal line 6B and the control electrode line 8B are shown. Although both the pixels 85 have different driving conditions as explained below, the pixels 85 have the same basic shutter control circuit.

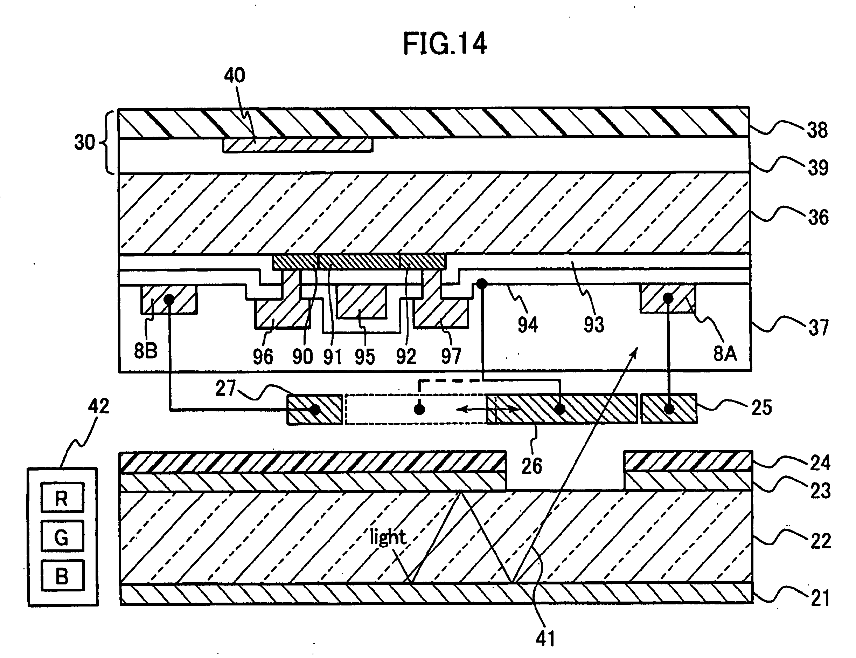

Fig. 14 is a diagram showing the sectional structure of a pixel section in the fifth embodiment. On the glass substrate 36, a low-temperature polycrystal silicon thin film transistor is provided. The low-temperature polycrystal silicon thin film transistor includes a low-impurity-density low-temperature polycrystal silicon thin film 91, a low-temperature polycrystal silicon thin films 92 and 90 doped with high-density n-type impurities, a gate insulating film 93, a gate electrode 95, an interlayer insulating film 94, a source electrode 96, and a drain electrode 97.

The low-temperature polycrystal silicon thin film transistor corresponds to the CMOS shutter voltage writing nMOS transistor 83. Further, on the glass substrate 36, the control electrode lines 8A and 8B are formed in an A1 wiring layer, which is the same as a layer of the source electrode 96 and the drain electrode 97. The control electrode lines 8A and 8B are covered with the protective film 37 including the multilayer film of silicon nitride and an organic material.

On the protective film 37, the dual actuator shutter assembly 1 including the shutter electrode 26 and the two control electrodes 25 and 27 is provided. The drain electrode 97 is connected to the shutter electrode 26, the control electrode line 8A is connected to the control electrode 25, and the control electrode line 8B is connected to the control electrode 27 respectively via contact holes. Insulating films are formed on the surfaces of the shutter electrode 26 and the two control electrodes 25 and 27 to prevent short circuit from being caused when the electrodes come into contact with each other. The position of the shutter electrode 26 is controlled by an electric field formed according to a correlation between a voltage input to the shutter electrode 26 and a voltage input to the two control electrodes 25 and 27. Therefore, in Fig. 14, a movable range of the shutter electrode 26 is also shown using a broken line. Although not shown in Fig. 14, other transistors provided in the pixel 85 also include low-temperature polycrystal silicon thin film transistors.

On the opposite side of the shutter electrode 26 from the glass substrate 36, the light guide 22 including the light source 42 including the independent LED light sources for three colors R (red), G (green), and B (blue) is provided. The reflection films 21 and 23 are provided on both the surfaces of the light guide 22. In particular, the reflection film 23 on the shutter electrode 26 side includes a multilayer dielectric film. The multilayer dielectric film included in the reflection film 23 has a laminated structure of a high-refractive index material such as $TiO_2$ or $Ta_2O_3$ and a low-refractive index material such as $SiO_2$ or $MgF_2$. The thicknesses of films of the laminated structure are designed to appropriate values, whereby it is possible to obtain sufficient total reflection characteristics in practice with respect to emitted lights of the independent LED light sources for R (red), G (green), and B (blue) included in the light source 42. A problem in using the multilayer dielectric film as a total reflection film, when the multilayer dielectric film is optimally designed for light made incident in the vertical direction, a reflection characteristic is deteriorated with respect to light made incident at an angle close to the horizontal. When light is transmitted through the reflection film 23, a light leak of the display device occurs, leading to marked deterioration in contrast. Therefore, in order to prevent such a light leak, the black resin film 24 formed of an organic material is further formed on the reflection film 23. The black resin film 24 can be formed by appropriately dispersing pigment particles such as carbon black or titanium black in polyimide resin or the like. In the reflection film 23 and the black resin film 24, as shown in Fig. 14, an opening is provided in a position corresponding to the shutter electrode 26. A part of the light 41 emitted from the light source 42 and propagated through the light guide 22 is emitted from the opening. The opening can be collectively processed and formed by photolithography using the black resin film 24 as a mask.

On the opposite side of the glass substrate 36 from the light guide 22, the touch panel 30 including the film sheet 38, the sense electrode 40, and the projective film 39 is provided. The sense electrode 40 of the touch panel 30 is connected to a circuit for touch detection in the periphery of the display region. However, since the configuration of the touch panel 30 is the generally-known technique, detailed explanation of the touch panel 30 is omitted.

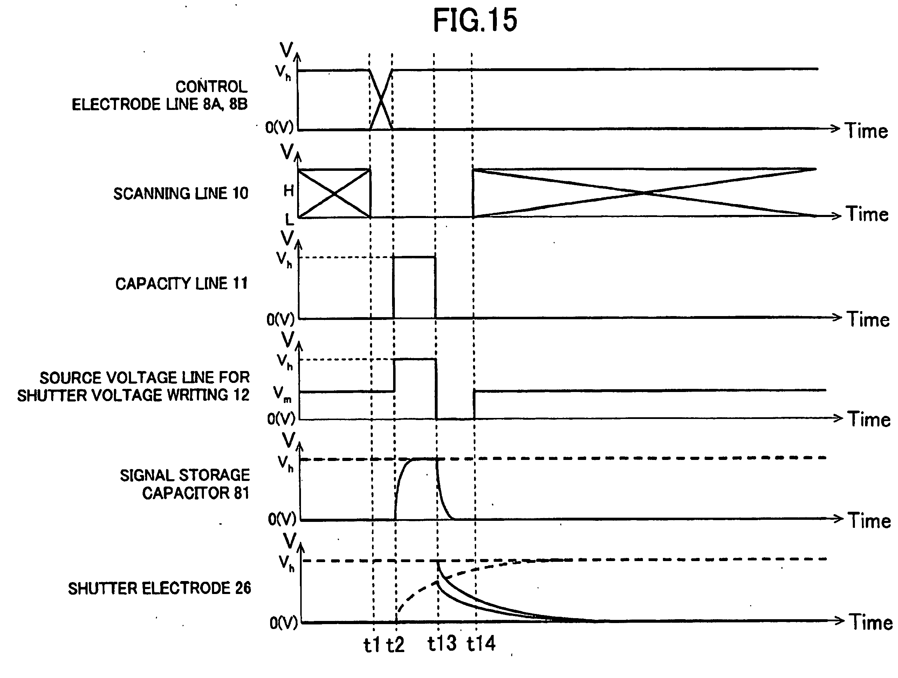

The operation in the fifth embodiment of the present invention is explained below with reference to Fig. 15. First, the operation of the shutter control circuit 87 in the fifth embodiment explained with reference to Fig. 13 is explained.

Fig. 15 is an operation timing chart of the shutter control circuit 87 in the fifth embodiment. The abscissa indicates time and the ordinate indicates voltages of the sections. In particular, a stored signal voltage of the CMOS signal storage capacity 81 (=CMOS inverter circuit input voltage) and a voltage value of the shutter electrode 26 of the dual actuator shutter assembly 1 described at the lower two stages take two values of about 0 (V) and about $V_h$ according to image signals. Therefore, to facilitate understanding of the drawing, basically, about 0 (V) is indicated by a solid line and about $V_h$ is indicated by a broken line.

Before timing t1

In this period, writing of an image signal voltage to the pixel is performed. In this period, the high voltage $V_h$ and the low voltage 0 (V) are respectively applied to the control electrode lines 8A and 8B. However, as explained below, for the purpose of polarity inversion driving of the shutter electrode 26, values of applied voltages to the control electrode lines 8A and 8B equivalent to the odd number pixel column and the even number pixel column interchange for each frame. The scanning switches 5 of the pixels are sequentially scanned by the scanning lines 10. A predetermined image signal voltage is written from the signal lines 6A and 6B in the signal storage capacitor 4 of the pixel in which the scanning switch 5 is scanned. The image signal voltage applied to the signal lines 6A and 6B takes two values of, for example, 4 (V) and 0 (V). 4 (V) and 0 (V) to which the image signal voltage corresponds respectively in white display time and black display time interchange for each column of the signal lines 6A and 6B according to values for each frame of the applied voltages to the control electrode lines 8A and 8B for the polarity inversion driving of the shutter electrode 26. 0 (V) is applied to the capacity line 11 and $V_m$ is applied to the source voltage line for writing shutter voltage 12. About 0 (V) or about $V_h$ is applied to the shutter electrode 26 of the dual actuator shutter assembly 1. A value of $V_h$ is designed to a minimum voltage at which electrostatic mechanical driving of the dual actuator shutter assembly 1 is possible. For example, this value is 15 (V). A value of $V_m$ is a value at which the transistor for CMOS writing 80 is not turned on even if a signal voltage is written in the signal storage capacitor 4. For example, the value is 4 (V). Compared with the image signal voltage in the first embodiment, the image signal voltage in the fifth embodiment takes a low value of 4 (V). This is because capacitance written by the transistor for CMOS writing 80 is a sum of about 20 fF of the CMOS signal storage capacitor 81 and gate capacitances of the CMOS shutter voltage writing nMOS transistor 83 and the CMOS shutter voltage writing pMOS transistor 82 and is a relatively small value and the scanning switch 5 and the transistor for CMOS writing 80 include the low-temperature polycrystal silicon thin film transistors having large current driving force.

Timing t1 to timing t2

In this period, for the purpose of the polarity inversion driving of the shutter electrode 26, the interchange of the applied voltages to the control electrode lines 8A and 8B equivalent to the odd number pixel column and the even number pixel column is performed for each frame. In this embodiment, as explained below, time weight is given to light emission of the light source 42 for each sub-field. PWM driving for controlling light emission to the outside is performed according to the opening and closing of the shutter electrode 26. However, the interchange of the applied voltages to the control electrode lines 8A and 8B may be performed for each sub-field or each plural sub-fields instead of each frame. In a sub-field in which the interchange of the applied voltages to the control electrode lines 8A and 8B is not performed, it is unnecessary to provide the period of [timing t1 to timing t2]. When the interchange of the applied voltages to the control electrode lines 8A and 8B is frequently performed, it is necessary to frequently provide a transition period from timing t1 to timing t2 involved in the interchange of the applied voltages and take notice of an increase in power consumption.

Timing t2 to timing t13

In this period, the signal voltage writing in the CMOS signal storage capacitors 81 is performed in all the pixels all at once on the basis of the image signal voltage written in the signal storage capacitor 4.
$V_h$ is simultaneously written in the capacity line 11 and the source voltage line for writing shutter voltage 12. Thereafter, the voltages of both of the capacity line 11 and the source voltage line for writing shutter voltage 12 are dropped to 0 (V). The transistor for CMOS writing 80 is controlled by this operation. When the image signal voltage written in the signal storage capacitor 4 is 0 (V), $(V_h-V_{th})$ is written in the CMOS signal storage capacitor 81 as a signal voltage. When the image signal voltage is 4 (V), 0 (V) is written in the CMOS signal storage capacitor 81 as a signal voltage. $V_{th}$ is a threshold voltage of the transistor for CMOS writing 80.
The signal voltage writing in the CMOS signal storage capacitor 81 is the operation of the pseudo diode circuit explained in detail above with reference to Figs. 6A to 6C and Figs. 7A to 7C in the first embodiment. Therefore, explanation of the signal voltage writing is omitted.

Timing t13 to timing t14

In this period, the capacity line 11 and the source voltage line for writing shutter voltage 12 maintain the voltage value dropped to 0 (V). The signal voltage written in the CMOS signal storage capacitor 81 is directly input to the gates of the CMOS shutter voltage writing nMOS transistor 83 and the CMOS shutter voltage writing pMOS transistor 82. As explained above, $V_h$ (e.g., 15 (V)) is always input to the pMOS source voltage line for writing CMOS shutter voltage 84 from the writing driving circuit 86. Therefore, at this point, the CMOS shutter voltage writing nMOS transistor 83 and the CMOS shutter voltage writing pMOS transistor 82 function as a CMOS inverter circuit. Therefore, when $(V_h-V_{th})$ is written in the CMOS signal storage capacitor 81 as a signal voltage, the CMOS inverter circuit outputs 0 (V) to the shutter electrode 26. When 0 (V) is written in the CMOS signal storage capacitor 81 as a signal voltage, the CMOS inverter circuit outputs $V_h$ (e.g., 15 (V)) to the shutter electrode 26.

After timing t4

In this period, as in the operation performed before timing t1, writing of an image signal voltage to the pixel is performed again. The scanning switches 5 of the pixels are sequentially scanned by the scanning lines 10. The predetermined image signal voltage is written from the signal lines 6A and 6B in the signal storage capacitor 4 of the pixel in which the scanning switch 5 is scanned. $V_m$ (e.g., 4 (V)) is applied to the source voltage line for writing shutter voltage 12. Even if a signal voltage is written in the signal storage capacitor 4, basically, the transistor for CMOS writing 80 is not turned on. In this embodiment, as in [timing t13 to timing t14], the CMOS shutter voltage writing nMOS transistor 83 and the CMOS shutter voltage writing pMOS transistor 82 continue to function as the CMOS inverter circuit. Therefore, there is an advantage that the writing of a signal voltage to the shutter electrode 26 and the write scanning of an image signal voltage in the pixel can be performed in parallel.

As in the first embodiment, when 0 (V) is written in the CMOS signal storage capacitor 81 and 4 (V) $(V_{sigH})$ is written in the signal storage capacitor 4, in this period, the voltage of the CMOS signal storage capacitor 81 rises again to $4(V)-V_{th}$ $(V_{sigH}-V_{th})$, which is a voltage at which the transistor for CMOS writing 80 is turned off. Since the CMOS inverter circuit including the CMOS shutter voltage writing nMOS transistor 83 and the CMOS shutter voltage writing pMOS transistor 82 is basically binary-driven, even if the voltage rises from 0 (V) to $4(V)-V_{th}(V_{sigH}-V_{th})$, the operation itself is not seriously hindered. However, it is necessary to take note that a through-current flowing through the CMOS inverter increases and power consumption increases according to the rise in the temperature. There is an advantage that it is possible to further increase the speed of the writing operation in the CMOS signal storage capacitor 81 by the transistor for CMOS writing 80 when $V_{sigH}$ is higher. However, on the other hand, power consumption in writing $V_{sigH}$ from the image signal voltage writing circuit 14 in the signal lines 6A and 6B increases and there are also the side effects explained above. Therefore, in this embodiment, it is necessary to optimally set, taking these into account, the voltage value of $V_{sigH}$ set to 4 (V).

The operation of the pixel peripheral circuit in the fifth embodiment explained with reference to Fig. 13 is explained.

In the writing period of an image signal voltage in the pixel equivalent to [before timing t1] explained above, the scanning lines 10 are sequentially scanned by the scanning circuit 15 and, in synchronization with the scanning, an image signal voltage is written in the signal lines 6A and 6B from the image signal voltage writing circuit 14. As explained above, in this embodiment, time weight is given to light emission of the light source 42 for each sub-field. PWM driving for controlling light emission to the outside is performed according to the opening and closing of the shutter electrode 26. Therefore, the image signal voltage written in the signal lines 6A and 6B from the image signal voltage writing circuit 14 is, for example, binary voltages of 0 (V) and 4 (V). A signal voltage applied to the shutter electrodes 26 provided in the pixels is controlled according to the image signal voltage. As explained above, 4 (V) and 0 (V) to which the image signal voltage corresponds respectively in white display time and black display time interchange for each column of the signal lines 6A and 6B according to values for each frame of the applied voltages to the control electrode lines 8A and 8B for the polarity inversion driving of the shutter electrode 26. Subsequently, as explained above, after the writing of the image signal voltage in all the pixels ends, in the period of [timing t1 to timing t2], for the purpose of the polarity inversion driving of the shutter electrode 26, the applied voltages to the control electrode lines 8A and 8B equivalent to the odd number pixel column and the even number pixel column are complementarily driven by the control electrode driving circuit 17 for each frame. The signal voltage writing in the CMOS signal storage capacitors 81 in all the pixels based on the image signal voltage written in the signal storage capacitor 4 in [timing t2 to timing t3] to be subsequently performed is performed by the writing driving circuit 86 driving the capacity lines 11 and the source voltage lines for writing shutter voltage 12 all at once. Thereafter, in [after timing t4], the writing driving circuit 86 performs application of $V_m$ to the source voltage line for writing shutter voltage 12. Further, the writing driving circuit 86 always input $V_h$ (e.g., 15 (V)) to the pMOS source voltage line for writing CMOS shutter voltage 84.

Finally, the operation of the structure in the vicinity of the shutter electrode 26 in the fifth embodiment described in Fig. 14 is different concerning the structure of the transistors and a voltage value of $V_h$. However, a basic operation is the same as the operation explained in the first embodiment. Therefore, further explanation is omitted.

As explained above, in the fifth embodiment, as in [timing t13 to timing 14], in [after timing t14, the CMOS shutter voltage writing nMOS transistor 83 and the CMOS shutter voltage writing pMOS transistor 82 continue to function as the CMOS inverter circuit. Therefore, there is an advantage that the writing of a signal voltage to the shutter electrode 26 and the write scanning of an image signal voltage in the pixel can be performed in parallel. Consequently, in this embodiment, in particular, when a display having a large number of pixels in the column direction is designed, it is possible to reduce a driving clock of the scanning circuit 15. This is a significant advantage in realizing improvement of the yield and a reduction in power consumption through securing of a circuit design margin.

In this embodiment, as in the first embodiment, it is possible to reduce wires in the pixel, increase the yield in mass production, and realize a reduction in cost. Since the light blocking film is formed of the dielectric, it is possible to prevent an electric field from being generated between the mechanical shutter and the light blocking film and realize high contrast without impairing the operation margin of the mechanical shutter.

[Sixth Embodiment]

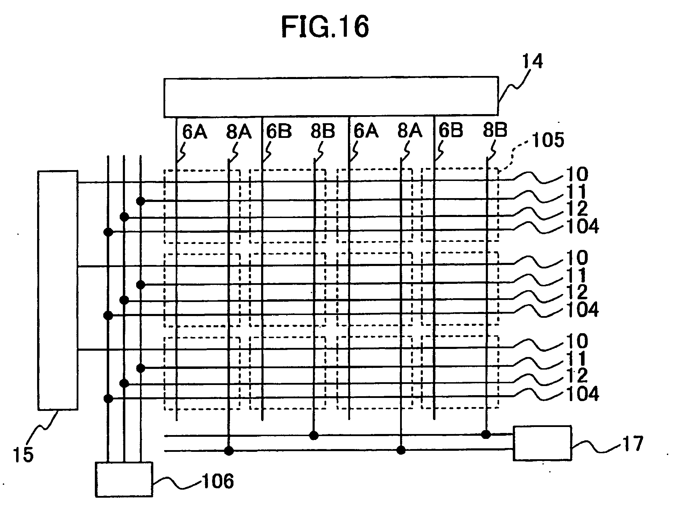

The configuration and the operation in a sixth embodiment of the present invention are explained in order below with reference to Figs. 16 to 18. The system configuration and the operation of an image display device according to the sixth embodiment, the configuration and the operation of a display panel, the configuration and the operation of pixels, and the like are the same as those in the first embodiment explained above. Therefore, explanation of the configurations and the operations is omitted and differences from the first embodiment are explained below.

Fig. 16 is a pixel peripheral circuit diagram in the sixth embodiment. Pixels 105 arrayed in a matrix shape form a display region. In the pixels 105, the signal lines 6A and 6B and the control electrode lines 8A and 8B are provided in the column direction and the scanning lines 10, the capacity lines 11, the source voltage lines for writing shutter voltage 12, and source voltage lines for writing next stage shutter voltage 104 are provided in the row direction. In the periphery of the display region, one ends of the signal lines 6A and 6B are connected to the image signal voltage writing circuit 14 and one ends of the control electrode lines 8A and 8B are connected to the control electrode driving circuit 17. One ends of the scanning lines 10 are connected to the scanning circuit 15 and one ends of the capacity lines 11, the source voltage lines for writing shutter voltage 12, and the source voltage lines for writing next stage shutter voltage 104 are connected to a writing driving circuit 106. In Fig. 16, for simplification, the display region is shown as a matrix of 4x3 pixels. However, the technical idea disclosed by the present invention does not specifically limit the number of pixels.

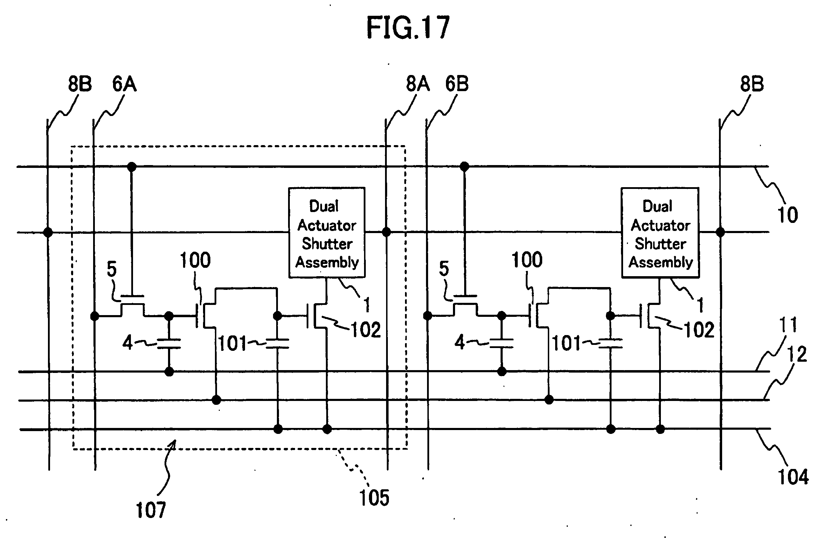

Fig. 17 is a diagram showing a shutter control circuit 107 in the sixth embodiment. The signal line 6A is provided in each of the pixels 105. The signal line 6A and the signal storage capacitor 4 are connected by the scanning switch 5. The signal storage capacitor 4 is further connected a gate of a transistor for next stage writing 100. A drain of the transistor for next stage writing 100 is connected to one end of a next stage signal storage capacitor 101. Further, the drain of the transistor for next stage writing 100 is connected to a gate of a transistor for writing next stage shutter voltage 102. Further, a drain of the transistor for writing next stage shutter voltage 102 is connected to the shutter electrode 26 of the dual actuator shutter assembly 1. Consequently, like the signal storage capacitor 4 and the transistor for next stage writing 100, the next stage signal storage capacitor 101 and the transistor for writing next stage shutter voltage 102 have a second pseudo diode circuit in the pixel 105. One of the two control electrodes of the dual actuator shutter assembly 1 is connected to the control electrode line 8A in the pixel 105. The other control electrode is connected to the control electrode line 8B of the pixel 105 adjacent to the pixel 105. The other end of the signal storage capacitor 4 is connected to the capacity line 11. A source of the transistor for next stage writing 100 is connected to the source voltage line for writing shutter voltage 12. The other end of the next stage signal storage capacitor 101 and a source of the transistor for writing next stage shutter voltage 102 are connected to the source voltage line for writing next stage shutter voltage 104. The gate of the scanning.switch 5 is connected to the scanning line 10. A three-dimensional pixel structure in which, for example, the dual actuator shutter assembly 1 is provided to be opposed to an opening provided on a light blocking surface is basically the same as the pixel structure in the first embodiment. In Fig. 17, two pixels 105, i.e., the pixel 105 including the signal line 6A and the control electrode line 8A and the pixel 105 including the signal line 6B and the control electrode line 8B are shown. Although both the pixels 105 have different driving conditions as explained below, the pixels 105 have the same basic shutter control circuit.

The sectional structure of a pixel section in the sixth embodiment is the same as the sectional structure of the pixel section in the first embodiment explained above. Therefore, explanation of the sectional structure is omitted.

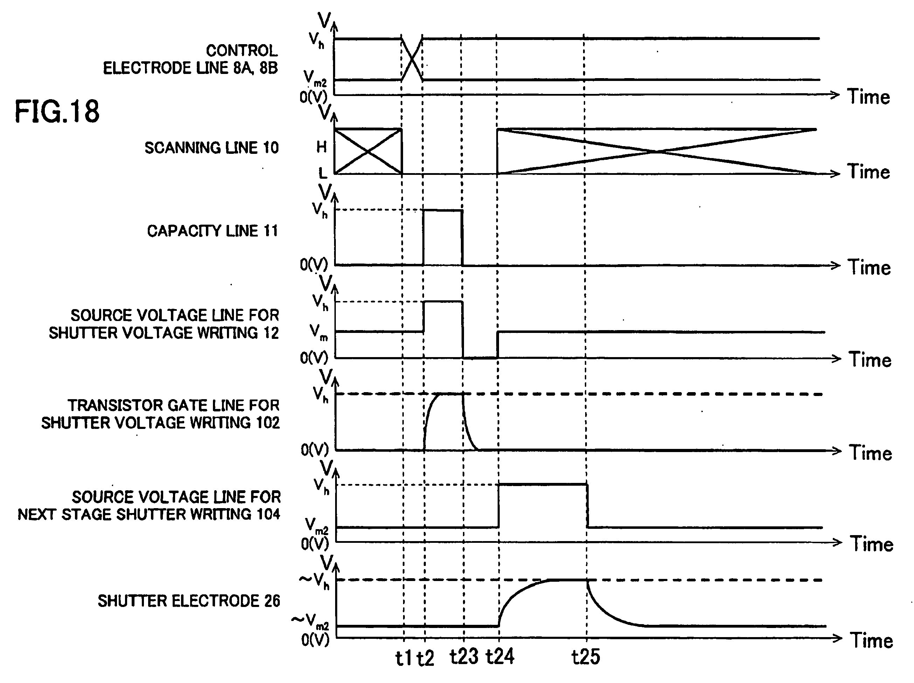

The operation of the shutter control circuit 107 in the sixth embodiment is explained with reference to Fig. 18. Fig. 18 is an operation timing chart of the shutter control circuit 107 in the sixth embodiment. The abscissa indicates time and the ordinate indicates voltages of the sections. In particular, a gate input voltage to the transistor for writing next stage shutter voltage 102 and a voltage value of the shutter electrode 26 of the dual actuator shutter assembly 1 described at the bottom stage take two values of about $V_{m2}$ and about $V_h$ according to image signals. Therefore, to facilitate understanding of the drawing, the former value is indicated by a solid line and the latter.value is indicated by a broken line.

Before timing t1

In this period, writing of an image signal voltage to the pixel is performed. In this period, the high voltage $V_h$ and a low voltage $V_{m2}$ (e.g., 7 (V)) are respectively applied to the control electrode lines 8A and 8B. However, as explained below, for the purpose of polarity inversion driving of the shutter electrode 26, values of applied voltages to the control electrode lines 8A and 8B equivalent to the odd number pixel column and the even number pixel column interchange for each frame. The scanning switches 5 of the pixels are sequentially scanned by the scanning lines 10. A predetermined image signal voltage is written from the signal lines 6A and 6B in the signal storage capacitor 4 of the pixel in which the scanning switch 5 is scanned. The image signal voltage applied to the signal lines 6A and 6B takes two values of, for example, 7 (V) and 0 (V). 7 (V) and 0 (V) to which the image signal voltage corresponds respectively in white display time and black display time interchange for each column of the signal lines 6A and 6B according to values for each frame of the applied voltages to the control electrode lines 8A and 8B for the polarity inversion driving of the shutter electrode 26. 0 (V) is applied to the capacity line 11 and $V_m$ is applied to the source voltage line for writing shutter voltage 12. $V_{m2}$ is applied to the source voltage line for writing next stage shutter voltage 102. About 0 (V) or about $V_h$ is applied to a gate of the transistor for writing next stage shutter voltage 102. About $V_{m2}$ or about $V_h$ is applied to the shutter electrode 26 of the dual actuator shutter assembly 1. A value of $V_h$ is designed to a minimum voltage at which electrostatic mechanical driving of the dual actuator shutter assembly 1 is possible. For example, this value is 20 (V).

A value of $V_m$ is a value at which the transistor for next stage writing 100 is not turned on even if a signal voltage is written in the signal storage capacitor 4. For example, the value is 7 (V). A value of $V_{m2}$ is a voltage set to prevent the transistor for writing next stage shutter voltage 102 from being turned on to cause a leak of the voltage $V_h$ stored in the shutter electrode 26 even if Sigh (7 (V)) is input to the signal storage capacitor 4 as explained below, whereby the voltage value of the next stage signal storage capacitor 101 rises from 0 (V) to $(V_{sigH}-V_{th})$ ($V_{th}$ is a threshold voltage of the transistor for next stage writing 100) via the transistor for next stage writing 100. The value of $V_{m2}$ basically satisfies Expression (2) below.

$$(V_{sigH}-V_{th})-V_{th2}<V_{m2} \qquad (2)$$

where, $V_{th2}$ is a threshold voltage of the transistor for writing next stage shutter voltage 102.

Timing t1 to timing t2

In this period, for the purpose of the polarity inversion driving of the shutter electrode 26, the interchange of the applied voltages to the control electrode lines 8A and 8B equivalent to the odd number pixel column and the even number pixel column is performed for each frame. In this embodiment, as explained below, time weight is given to light emission of the light source 42 for each sub-field. PWM driving for controlling light emission to the outside is performed according to the opening and closing of the shutter electrode 26. However, the interchange of the applied voltages to the control electrode lines 8A and 8B may be performed for each sub-field or each plural sub-fields instead of each frame. In a subfield in which the interchange of the applied voltages to the control electrode lines 8A and 8B is not performed, it is unnecessary to provide the period of [timing t1 to timing t2]. When the interchange of the applied voltages to the control electrode lines 8A and 8B is frequently performed, it is necessary to frequently provide a transition period from timing t1 to timing t2 involved in the interchange of the applied voltages and take notice of an increase in power consumption.

Timing t2 to timing t23

In this period, the signal voltage writing in the next stage signal storage capacitors 101 is performed in all the pixels all at once on the basis of the image signal voltage written in the signal storage capacitor 4. The signal voltage written in the next stage signal storage capacitors 101 is the same as the gate input voltage to the transistors for writing next stage shutter voltage 102.

$V_h$ is simultaneously written in the capacity line 11 and the source voltage line for writing shutter voltage 12 Thereafter, the voltages of both of the capacity line 11 and the source voltage line for writing shutter voltage 12 are dropped to 0 (V). The transistor for next stage writing 100 is controlled by this operation. When the image signal voltage written in the signal storage capacitor 4 is 0 (V), $(V_h-V_{th})$ is written in the next stage signal storage capacitor 101 as a signal voltage. When the image signal voltage is 7 (V), 0 (V) is written in the next stage signal storage capacitor 101 as a signal voltage. $V_{th}$ is a threshold voltage of the transistor for next stage writing 100.

The signal voltage writing in the next stage signal storage capacitor 101 is the operation of the pseudo diode circuit explained in detail above with reference to Figs. 6A to 6C and Figs. 7A to 7C in the first embodiment. Therefore, explanation of the signal voltage writing is omitted.

Timing t23 to timing t24

In this period, the capacity line 11 and the source voltage line for writing shutter voltage 12 maintain the voltage value dropped.to 0 (V). When 0 (V) is written in the next stage signal storage capacitor 101, the voltage in this period converges to about 0 (V).

Timing t24 to timing t25

In this period, the signal voltage writing to the shutter electrodes 26 is performed in all the pixels all at once on the basis of the image signal voltage written in the next stage signal storage capacitor 101.

$V_h$ is written in the source voltage line for writing next stage shutter voltage 104. Thereafter, this voltage is dropped to $V_{m2}$ again. The transistor for writing next stage shutter voltage 102 is controlled by this operation. When the image signal voltage written in the next stage signal storage capacitor 101 is 0 (V), $(V_h-V_{th2})$ is written to the shutter electrode 26 as a signal voltage. When the image signal voltage is 7 (V), $V_{m2}$ is written to the shutter electrode 26 as a signal voltage. $V_{th2}$ is a threshold voltage of the transistor for writing next stage shutter voltage 102.

The signal voltage writing to the shutter electrode 26 is the operation of the pseudo diode circuit explained above. Therefore, explanation of the signal voltage writing is omitted.

In parallel to the signal voltage writing, in the same manner as the operation before timing t1, writing of an image signal voltage in the pixel is performed again. The scanning switches 5 of the pixels are sequentially scanned by the scanning lines 10. The predetermined image signal voltage is written from the signal lines 6A and 6B in the signal storage capacitor 4 of the pixel in which the scanning switch 5 is scanned. $V_m$ is applied to the source voltage line for writing shutter voltage 12. Even if a signal voltage is written in the signal storage capacitor 4, basically, the transistor for next stage writing 100 is not turned on.

After timing t25

In this period, the writing of the image signal voltage in the pixel is continuously performed. When a signal voltage of $V_{m2}$ is written to the shutter electrode 26 by the operation of the pseudo diode circuit, the writing is performed in the beginning of this period as shown in Fig. 18.

When 0 (V) is written in the next stage signal storage capacitor 101 and 7 (V) ($V_{sigH}$) is written in the signal storage capacitor 4, as in the first embodiment, the voltage of the next stage signal storage capacitor 101 rises again to $7(V)-V_{th}(V_{sigH}-V_{th})$, which is a voltage at which the transistor next stage writing 100 is turned off, in this period. As explained above, at this point, the source voltage line for writing next stage shutter voltage 104 is set to $V_{m2}$ to prevent the transistor for writing next stage shutter voltage 102 from being turned on to cause a leak of the voltage $V_h$ stored in the shutter electrode 26 and the value of $V_{m2}$ satisfies Expression (2).

The operation of the pixel peripheral circuit in the sixth embodiment shown in Fig. 16 is explained below.

In the writing period of an image signal voltage in the pixel equivalent to [before timing t1] explained above, the scanning lines 10 are sequentially scanned by the scanning circuits 15 and, in synchronization with the scanning, an image signal voltage is written in the signal lines 6A and 6B from the image signal voltage writing circuit 14. As explained above, in this embodiment, time weight is given to light emission of the light source 42 for each sub-field. PWM driving for controlling light emission to the outside is performed according to the opening and closing of the shutter electrode 26. Therefore, the image signal voltage written in the signal lines 6A and 6B from the image signal voltage writing circuit 14 is, for example, binary voltages of 0 (V) and 7 (V). A signal voltage applied to the shutter electrodes 26 provided in the pixels is controlled according to the image signal voltage. As explained above, 7 (V) and 0 (V) to which the image signal voltage corresponds respectively in white display time and black display time interchange for each column of the signal lines 6A and 6B according to values for each frame of the applied voltages to the control electrode lines 8A and 8B for the polarity inversion driving of the shutter electrode 26. As explained above, subsequently, after the writing of the image signal voltage in all the pixels ends, in the period of [timing t1 to timing t2], for the purpose of the polarity inversion driving of the shutter electrode 26, the applied voltages to the control electrode lines 8A and 8B equivalent to the odd number pixel column and the even number pixel column are complementarily driven by the control electrode driving circuit 17. The signal voltage writing in the next stage signal storage capacitors 101 in all the pixels based on the image signal voltage written in the signal storage capacitor 4 in [timing t2 to timing t23] to be subsequently performed is performed by the writing driving circuit 106 driving the capacity lines 11 and the source voltage lines for writing shutter voltage 12 all at once. Thereafter, in [timing t24 to timing t25], the writing driving circuit 106 drives the source voltage lines for writing next stage shutter voltage 104 all at once, whereby the signal voltage writing to the shutter electrodes 26 is performed and application of $V_m$ to the source voltage lines for writing shutter voltage 12 is performed.

As explained above, the sectional structure of the pixel section in the sixth embodiment is the same as the sectional structure of the pixel section in the first embodiment. The basic operation in the sixth embodiment is the same as the basic operation in the first embodiment. Therefore, further explanation is omitted.

As explained above, in the sixth embodiment, the next stage signal storage capacitor 101 and the transistor for writing next stage shutter voltage 102 function as the pseudo diode circuit and perform writing to the shutter electrode 26. Therefore, there is an advantage that, in [timing t24 to timing t25] and [after timing t25], the writing of a signal voltage to the shutter electrode 26 and the write scanning of an image signal voltage in the pixel can be performed in parallel. Unlike the input capacitance value to the shutter electrode 26, the capacitance value of the next stage signal storage capacitor 101 takes a fixed value irrespective of the position of the shutter electrode 26. Therefore, the writing in the next stage signal storage capacitor 101 can be completed in a relatively short time. Consequently, in this embodiment, in particular, when a display having a large number of pixels in the column direction is designed, it is possible to reduce a driving clock of the scanning circuit 15. This is a significant advantage in realizing improvement of the yield and a reduction in power consumption through securing of a circuit design margin.

In this embodiment, as in the first embodiment, it is possible to reduce wires in the pixel, increase the yield in mass production, and realize a reduction in cost. Since the light blocking film is formed of the dielectric, it is possible to prevent an electric field from being generated between the mechanical shutter and the light blocking film and realize high contrast without impairing the operation margin of the mechanical shutter.

[Seventh Embodiment]

A seventh embodiment in the present invention is explained below with reference to Fig. 19.

Fig. 19 is a configuration diagram of an Internet image display apparatus 150 according to a seventh embodiment. Compressed image data or the like is input to a wireless interface (I/F) circuit 152 from the outside as wireless data. An output of the wireless I/F circuit 152 is connected to a data bus 158 via an I/O (Input/Output) circuit 153. Besides, a microprocessor (MPU) 154, a display panel controller 156, a frame memory 157, and the like are connected to the data bus 158. An output of the display panel controller 156 is input to a display device 151 employing a mechanical shutter. Further, a power supply 159 is provided in the Internet image display apparatus 150. The display device 151 employing the mechanical shutter has a configuration and an operation same as the configuration and the operation of the display device according to the first embodiment explained above. Therefore, explanation of the internal configuration and the operation of the display device 151 is omitted.

The operation in the seventh embodiment is explained below. First, the wireless I/F circuit 152 captures compressed image data from the outside according to a command and transfers the image data to the microprocessor 154 and the frame memory 157 via the I/O circuit 153. The microprocessor 154 receives command operation from a user, drives the entire Internet image display apparatus 150 as required, and performs decoding and signal processing of the compressed image data and information display. The image data subjected to the signal processing can be temporarily stored in the frame memory 157.

When the microprocessor 154 issues a display command, the image data is input to the display device 151 from the frame memory 157 via the display panel controller 156 according to the command. The display device 151 displays the input image data on a real time basis. At this point, the display panel controller 156 performs output control of predetermined timing pulses necessary for simultaneously displays images. The display device 151 displays the input image data on a real time basis using these signals as explained in the first embodiment. The power supply 159 includes a secondary battery and supplies electric power for driving the entire Internet image display apparatus 150.

According to this embodiment, high-image quality display is possible and it is possible to provide, at low cost, the Internet image display apparatus 150 that consumes less electric power.

In this embodiment, the display device 151 explained in the first embodiment is used as an image display device. Besides, various display devices described in the other embodiments of the present invention can be used. However, in this case, it goes without saying that the timing pulses output by the display panel controller 156 need to be slightly changed as required.

In the Internet image display apparatus 150 according to this embodiment, as in the first embodiment, it is possible to reduce wires in the pixel, increase the yield in mass production, and realize a reduction in cost. Since the light blocking film is formed of the dielectric, it is possible to prevent an electric field from being generated between the mechanical shutter and the light blocking film and realize high contrast without impairing the operation margin of the mechanical shutter.

While there have been described what are at present considered to be certain embodiments of the invention, it will be understood that various modifications may be made thereto, and it is intended that the appended claim cover all such modifications as fall within the scope of the invention.

The above embodiments of the invention as well as the appended claims and figures show multiple characterizing features of the invention in specific combinations. The skilled person will easily be able to consider further combinations or sub-combinations of these features in order to adapt the invention as defined in the claims to his specific needs.

**Claims**

1. An image display device comprising:

   a mechanical shutter unit (26) provided for each of pixels arrayed in a matrix shape along a row direction and a column direction and configured to move on a transparent substrate (36) in parallel to a surface of the transparent substrate (36) and perform transmission and blocking of light;
   a pair of control electrodes (25, 27) arranged on both side of the mechanical shutter unit (26) on the transparent substrate (36); the mechanical shutter unit (26) and the pair of control electrodes (25, 27) being included in a dual actuator shutter assembly (1) of a pixel (13);
   a planar light source (42) configured to emit light to the transparent substrate (36) and arranged in parallel to the transparent substrate (36);

a light blocking film (23) formed on the transparent substrate (36) side of the planar light source (42), including an optical opening, which is opened for each of the pixels to corresponds to a region where the mechanical shutter unit (26) performs transmission and blocking of light, and configured to shield a region other than the optical opening from light emitted from the planar light source (42), wherein the light blocking film (23) is formed of a dielectric;

a control electrode driving circuit (17) configured to apply a high voltage and a low voltage for the pair of control electrodes (25, 27) respectively to the control electrodes (25, 27),

wherein the low voltage is 0 (V) and the high voltage is designated to a voltage at which electrostatic mechanical driving of the dual actuator shutter assembly (1) is possible, and

wherein each electrode of the pair of control electrodes (25, 27) is electrically coupled to a control electrode (25, 27) of a respective adjacent pixel in the row direction;

a plurality of scanning lines (10) provided along the row direction across the transparent substrate (36);

a plurality of signal lines (6A) provided in the column direction across the transparent substrate (36); and

a shutter control circuit (18) provided for each of the pixels and configured to apply to the mechanical shutter unit 26, at timing corresponding to a gradation value of each of the pixels, a second high voltage or a second low voltage based on an image signal set via a signal line (6A) of the plurality of signal lines (6A) to thereby electrostatically control an operation of the mechanical shutter unit (26),

wherein the second low voltage is 0 (V) and the second high voltage is designated to a voltage at which electrostatic mechanical driving of the dual actuator shutter assembly (1) is possible.

2. The image display device according to claim 1, wherein the light blocking film (23) includes a multilayer dielectric film having a reflection wavelength band of visible light.

3. The image display device according to claim 2, wherein

the light blocking film (23) further includes a black resin film (24), and

the multilayer dielectric film is provided on the light source side, and

the black resin film (24) is provided on the mechanical shutter unit side.

4. The image display device according to one of the preceding claims, wherein

the shutter control circuit (18) is configured using an amorphous silicon thin film transistor.

5. The image display device according to one of the preceding claims, wherein the shutter control circuit (18) is configured using an oxide thin film transistor.

6. The image display device according to one of the preceding claims, wherein voltage polarities of the pair of control electrodes (25, 27) are inverted for each column.

7. The image display device according to one of the preceding claims, wherein polarities of image signals written in the pixels are inverted for each column.

8. The image display device according to one of the preceding claims, wherein an electrode (40) for a touch panel (30) is provided on an opposite side of the surface of the transparent substrate (36) on which the mechanical shutter unit (26) is provided.

9. The image display device according to claim 8, wherein the touch panel (30) is a capacitance type.

10. The image display device according to one of the preceding claims, wherein the shutter control circuit (18) includes:

a first thin film transistor (5), one of a source electrode and a drain electrode of which is connected to the signal line (6A), the other of the source electrode and the drain electrodes of which is connected to a first node, and a gate electrode of which is connected to the scanning line (10);

a first storage capacitor (4), to one terminal of which the first node is connected and the other terminal of which is connected to a first control line (11); and

a second thin film transistor (12), to a gate electrode of which the first node is connected, a source electrode of which is connected to a second control line, and a drain electrode of which is connected to the mechanical shutter unit (26).

11. The image display device according to one of the preceding claims, wherein a color filter (51) is formed in the optical opening provided in the light blocking film.

12. The image display device according to claim 11, wherein

the light blocking film (23) includes a multilayer dielectric film (50R, 50G, 50B), and

the color filter (51) has a layer configuration of apart of the multilayer dielectric film included in the light blocking film (23).

13. The image display device according to one of the preceding claims, wherein a protective film (60) is formed on the light blocking film (23).

14. The image display device according to claim 1, wherein a capacitor is provided between the mechanical shutter unit (26) and the control electrodes (25, 27).

15. The image display device according to claim 1, wherein
the shutter control circuit (18) includes:

a first thin film transistor (5), one of a source electrode and a drain electrode is connected to the signal line (6A), the other of the source electrode and the drain electrode is connected to a first node, and a gate electrode of which is connected to the scanning line (10);
a first storage capacitor (4), one terminal of which is connected to the first node and the other terminal of which is connected to a first control line (11);
a third thin film transistor, to a gate electrode of which the first node is connected, a source electrode of which is connected to a second control line, and a drain electrode of which is connected to a second node;
a second storage capacitor (101), to one terminal of which the second node is connected and the other terminal of which is connected to a third control line; and
a fourth thin film transistor, to a gate electrode of which the second node is connected, a source electrode of which is connected to a fourth control line, and a drain electrode of which is connected to the mechanical shutter unit (26).

16. The image display device according to claim 15, wherein
the first control line and the fourth control line are a same control line, and
the image display device further comprises a fifth thin film transistor, to a gate electrode of which the second node is connected, to a source electrode of which a predetermined voltage is applied, and a drain electrode of which is connected to the mechanical shutter unit, the fifth thin film transistor having a conductive carrier characteristic different from a conductive carrier characteristic of the fourth thin film transistor.

17. The image display device according to claim 15, wherein the third control line and the fourth control line are a same control line.

**Patentansprüche**

1. Eine Bildanzeigevorrichtung, wobei die Vorrichtung Folgendes aufweist:

eine mechanische Verschlusseinheit (26), die für alle Pixel, die in einer Matrixform entlang einer Reihenrichtung und einer Spaltenrichtung angeordnet sind, bereitgestellt wird und konfiguriert ist sich auf einem transparenten Substrat (36) zu bewegen, parallel zu einer Oberfläche des transparenten Substrats (36) und um das Aussenden und Blockieren von Licht auszuführen;
ein Paar von Steuerelektroden (25, 27), die auf beiden Seiten der mechanischen Verschlusseinheit (26) auf dem transparenten Substrat (36) angeordnet sind; wobei die mechanische Verschlusseinheit (26) und das Paar von Elektroden (25, 27) in einer dualen Betätigerverschlussanordnung (1) eines Pixels (13) enthalten ist;
eine ebene Lichtquelle (42), die konfiguriert ist Licht auf das transparente Substrat (36) zu emittieren und parallel zu dem transparenten Substrat (36) angeordnet ist;
eine lichtblockierende Schicht (23), die auf der transparenten Substrat (36) Seite auf der ebenen Lichtquelle (42) ausgebildet ist, wobei die Schicht eine optische Öffnung aufweist, die für jedes der Pixel geöffnet ist entsprechend eines Bereichs, wo die mechanische Verschlusseinheit (26) das Aussenden und Blockieren von Licht ausführt, und konfiguriert ist einen Bereich, der sich von dem der optischen Öffnung unterscheidet, gegenüber Licht, das von der ebenen Lichtquelle (42) ausgesendet wird, abzuschirmen,
wobei die lichtblockierende Schicht (23) aus einem Dielektrikum gebildet wird;
einen Steuerelektrodenbetriebsschaltkreis (17), der konfiguriert ist eine Hochspannung und eine Niedrigspannung an das Paar von Steuerelektroden (25, 27) anzulegen, beziehungsweise an die Steuerelektroden (25, 27),
wobei die Niedrigspannung 0 (V) ist und die Hochspannung für eine Spannung vorgesehen ist bei der ein elektrostatischer mechanischer Betrieb der dualen Betätigerverschlussanordnung (1) möglich ist, und wobei jede Elektrode des Paars von Steuerelektroden (25, 27) elektrisch mit einer Steuerelektrode (25, 27) eines entsprechenden benachbarten Pixel in der Reihenrichtung verbunden ist;
eine Vielzahl von Scanleitungen (10), die entlang der Reihenrichtung über das transparente Substrat hinweg bereitgestellt sind;
eine Vielzahl von Signalleitungen (6A), die in der Spaltenrichtung über das transparente Substrat hinweg bereitgestellt sind; und

ein Verschlusssteuerschaltkreis (18), der für jedes der Pixel bereitgestellt ist und der konfiguriert ist an die mechanische Verschlusseinheit (26) zu Zeiten, entsprechend einem Abstufungswert von jedem der Pixel, eine zweite Hochspannung oder eine zweite Niedrigspannung anzulegen, basierend auf einem Bildsignal das über eine Signalleitung (6A), der Vielzahl von Signalleitungen (6A), bereitgestellt wird, gesetzt wird, um dadurch elektrostatisch einen Betrieb der mechanischen Verschlusseinheit (26) zu steuern,

wobei die zweite Niedrigspannung 0 (V) ist und die zweite Hochspannung für eine Spannung vorgesehen ist bei der ein elektrostatischer mechanischer Betrieb der dualen Betätigerverschlussanordnung (1) möglich ist.

2. Die Bildanzeigevorrichtung nach Anspruch 1, wobei die lichtblockierende Schicht (23) eine Vielfachschicht-dielektrische Schicht aufweist mit einem Reflexionswellenlängenband des sichtbaren Lichts.

3. Die Bildanzeigevorrichtung nach Anspruch 2, wobei die lichtblockierende Schicht ferner eine schwarze Harzschicht (24) aufweist, und die Vielfachschicht-dielektrische Schicht auf der Seite der Lichtquelle bereitgestellt wird, und wobei die schwarze Harzschicht (24) auf der Seite der mechanischen Verschlusseinheit bereitgestellt wird.

4. Die Bildanzeigevorrichtung nach einem der vorhergehenden Ansprüche, wobei die Verschlusssteuereinheit (18) konfiguriert ist einen amorphen Silizium-Dünnschichttransistor zu verwenden.

5. Die Bildanzeigevorrichtung nach einem der vorhergehenden Ansprüche, wobei die Verschlusssteuereinheit (18) konfiguriert ist einen Oxid-Dünnschichttransistor zu verwenden.

6. Die Bildanzeigevorrichtung nach einem der vorhergehenden Ansprüche, wobei Spannungspolaritäten des Paares von Steuerelektroden (25, 27) für jede Spalte invertiert sind.

7. Die Bildanzeigevorrichtung nach einem der vorhergehenden Ansprüche, wobei Polaritäten des Bildsignals, die in den Pixel geschrieben sind, für jede Spalte invertiert sind.

8. Die Bildanzeigevorrichtung nach einem der vorhergehenden Ansprüche, wobei eine Elektrode (40) für ein Tastfeld (30) auf einer gegeneiberliegenden Seite der Oberfläche des transparenten Substrats (36) bereitgestellt wird, auf der die mechanische Verschlusseinheit (26) bereitgestellt wird.

9. Die Bildanzeigevorrichtung nach Anspruch 8, wobei das Tastfeld (30) von einem Kapazitätstyp ist.

10. Die Bildanzeigevorrichtung nach einem der vorhergehenden Ansprüche, wobei der Verschlusssteuerschaltkreis (18) ferner Folgendes aufweist:

einen ersten Dünnschichttransistor (5), von dem entweder eine Source Elektrode oder eine Drain Elektrode mit der Signalleitung (6A) verbunden ist, wobei die andere der Source Elektrode und der Drain Elektrode mit einem ersten Knoten verbunden ist und wobei eine Gate Elektrode des Transistors mit der Scanleitung (10) verbunden ist;

einen ersten Speicherkondensator (4), an dessen einen Anschluss der erste Knoten angeschlossen ist und an dessen anderen Anschluss eine erste Steuerleitung (11) angeschlossen ist; und

einen zweiten Dünnschichttransistor (12), an dessen Gate Elektrode der erste Knoten angeschlossen ist, und an dessen Source Elektrode eine zweite Steuerleitung angeschlossen ist, und an dessen Drain Elektrode die mechanische Verschlusseinheit (26) angeschlossen ist.

11. Die Bildanzeigevorrichtung nach einem der vorhergehenden Ansprüche, wobei ein Farbfilter (51) in der optischen Öffnung, die in der lichtblockierenden Schicht bereitgestellt ist, ausgebildet ist.

12. Die Bildanzeigevorrichtung nach Anspruch 11, wobei die lichtblockierende Schicht (23) eine Vielfachschicht-dielektrische Schicht (50R, 50G, 50B) aufweist, und wobei der Farbfilter (51) eine Schichtkonfiguration eines Teils der Vielfachschicht-dielektrischen Schicht aufweist, der in der lichtblockierenden Schicht enthalten ist.

13. Die Bildanzeigevorrichtung nach einem der vorhergehenden Ansprüche, wobei eine Schutzschicht (60) auf der lichtblockierenden Schicht (23) ausgebildet ist.

14. Die Bildanzeigevorrichtung nach Anspruch 1, wobei ein Kondensator zwischen der mechanischen Verschlusseinheit (26) und den Steuerelektroden (25, 27) bereitgestellt ist.

15. Die Bildanzeigevorrichtung nach Anspruch 1, wobei die Verschlusssteuereinheit (18) ferner Folgendes aufweist:

einen ersten Dünnschichttransistor (5), von dem entweder eine Source Elektrode oder eine Drain Elektrode mit der Signalleitung (6A) verbunden ist, wobei die andere der Source Elektrode und der Drain Elektrode mit einem ersten Knoten verbunden ist und wobei eine Gate Elektrode des Transistors mit der Scanleitung (10) verbunden ist;

einen ersten Speicherkondensator (4), an dessen einen Anschluss der erste Knoten angeschlossen ist und an dessen anderen Anschluss eine erste Steuerleitung (11) angeschlossen ist;

einen dritten Dünnschichttransistor, an dessen Gate Elektrode der erste Knoten angeschlossen ist, und an dessen Source Elektrode eine zweite Steuerleitung angeschlossen ist, und an dessen Drain Elektrode ein zweiter Knoten angeschlossen ist;

einen zweiten Speicherkondensator (101), an dessen einen Anschluss der zweite Knoten angeschlossen ist und an dessen anderen Anschluss eine dritte Steuerleitung angeschlossen ist; und

einen vierten Dünnschichttransistor, an dessen Gate Elektrode der zweite Knoten angeschlossen ist, und an dessen Source Elektrode eine vierte Steuerleitung angeschlossen ist, und an dessen Drain Elektrode die mechanische Verschlusseinheit (26) angeschlossen ist.

16. Die Bildanzeigevorrichtung nach Anspruch 15, wobei die erste Steuerleitung und die vierte Steuerleitung eine gleiche Steuerleitung ist, und wobei die Bildanzeigevorrichtung ferner einen fünften Dünnschichttransistor aufweist, an dessen Gate Elektrode der zweite Knoten angeschlossen ist, und an dessen Source Elektrode eine vorbestimmte Spannung angelegt ist, und an dessen Drain Elektrode die mechanische Verschlusseinheit angeschlossen ist, wobei der fünfte Dünnschichttransistor eine Leitungsträgercharakteristik aufweist, die sich von einer Leitungsträgercharakteristik des vierten Dünnschichttransistors unterscheidet.

17. Die Bildanzeigevorrichtung nach Anspruch 15, wobei die dritte Steuerleitung und die vierte Steuerleitung eine gleiche Steuerleitung sind.

## Revendications

1. Dispositif d'affichage d'image, comprenant :

une unité d'obturateur mécanique (26) prévue pour chaque pixel parmi des pixels disposés en forme de matrice le long d'une direction de rangée et d'une direction de colonne et configurée pour se déplacer sur un substrat transparent (36) parallèlement à une surface du substrat transparent (36) et effectuer une transmission et un blocage de lumière ;

une paire d'électrodes de commande (25, 27) agencées des deux côtés de l'unité d'obturateur mécanique (26) sur le substrat transparent (36), l'unité d'obturateur mécanique (26) et la paire d'électrodes de commande (25, 27) étant incluses dans un ensemble obturateur à deux actionneurs (1) d'un pixel (13) ;

une source de lumière plane (42) configurée pour émettre de la lumière vers le substrat transparent (36) et agencée parallèlement au substrat transparent (36) ;

un film bloquant la lumière (23) formé côté substrat transparent (36) de la source de lumière plane (42), comprenant une ouverture optique, qui est ouverte pour chacun des pixels pour correspondre à une région dans laquelle l'unité d'obturateur mécanique (26) effectue une transmission et un blocage de lumière, et configuré pour protéger une région autre que l'ouverture optique de la lumière émise par la source de lumière plane (42), le film bloquant la lumière (23) étant fait d'un diélectrique ;

un circuit d'attaque d'électrodes de commande (17) configuré pour appliquer une tension haute et une tension basse pour la paire d'électrodes de commande (25, 27) respectivement aux électrodes de commande (25, 27),

la tension basse étant de 0 (V) et la tension haute étant désignée à une tension à laquelle un entraînement mécanique électrostatique de l'ensemble obturateur à deux actionneurs (1) est possible, et

chaque électrode de la paire d'électrodes de commande (25, 27) étant électriquement couplée à une électrode de commande (25, 27) d'un pixel adjacent respectif dans la direction de rangée ;

une pluralité de lignes de balayage (10) disposées dans la direction de rangée en travers du substrat transparent (36) ;

une pluralité de lignes de signal (6A) disposées dans la direction de colonne en travers du substrat transparent (36) ; et

un circuit de commande d'obturateur (18) prévu pour chacun des pixels et configuré pour appliquer à l'unité d'obturateur mécanique (26), à un moment correspondant à une valeur de gradation de chacun des pixels, une seconde tension haute ou une seconde tension basse sur la base d'un signal d'image établi par l'intermédiaire d'une ligne de signal (6A) de la pluralité de lignes de signal (6A) pour ainsi commander par voie électrostatique une opération de l'unité d'obturateur mécanique (26),

la seconde tension basse étant de 0 (V) et la seconde tension haute étant désignée à une tension à laquelle un entraînement mécanique électrostatique de l'ensemble obturateur à deux actionneurs (1) est possible.

2. Dispositif d'affichage d'image selon la revendication 1, dans lequel le film bloquant la lumière (23) comprend un film diélectrique multicouche ayant une bande de longueur d'onde de réflexion de la lumière visible.

3. Dispositif d'affichage d'image selon la revendication 2, dans lequel :

le film bloquant la lumière (23) comprend en outre un film de résine noir (24), et
le film diélectrique multicouche est placé côté source de lumière, et
le film de résine noir (24) est placé côté unité d'obturateur mécanique.

4. Dispositif d'affichage d'image selon l'une des revendications précédentes, dans lequel :

le circuit de commande d'obturateur (18) est configuré à l'aide d'un transistor à couches minces au silicium amorphe.

5. Dispositif d'affichage d'image selon l'une des revendications précédentes, dans lequel le circuit de commande d'obturateur (18) est configuré à l'aide d'un transistor à couches minces à l'oxyde.

6. Dispositif d'affichage d'image selon l'une des revendications précédentes, dans lequel les polarités de tension de la paire d'électrodes de commande (25, 27) sont inversées pour chaque colonne.

7. Dispositif d'affichage d'image selon l'une des revendications précédentes, dans lequel des polarités de signaux d'image écrits dans les pixels sont inversées pour chaque colonne.

8. Dispositif d'affichage d'image selon l'une des revendications précédentes, dans lequel une électrode (40) pour un panneau tactile (30) est placée de l'autre côté de la surface du substrat transparent (36) sur laquelle l'unité d'obturateur mécanique (26) est placée.

9. Dispositif d'affichage d'image selon la revendication 8, dans lequel le panneau tactile (30) est d'un type capacitif.

10. Dispositif d'affichage d'image selon l'une des revendications précédentes, dans lequel le circuit de commande d'obturateur (18) comprend :

un premier transistor à couches minces (5), dont une électrode parmi une électrode de source et une électrode de drain est connectée à la ligne de signal (6A), dont l'autre électrode parmi l'électrode de source et l'électrode de drain est connectée à un premier noeud, et dont une électrode de grille est connectée à la ligne de balayage (10) ;
un premier condensateur de stockage (4), à une borne duquel est connecté le premier noeud et dont l'autre borne est connectée à une première ligne de commande (11); et
un deuxième transistor à couches minces (12), à une électrode de grille duquel est connecté le premier noeud, dont une électrode de source est connectée à une deuxième ligne de commande, et dont une électrode de drain est connectée à l'unité d'obturateur mécanique (26).

11. Dispositif d'affichage d'image selon l'une des revendications précédentes, dans lequel un filtre coloré (51) est formé dans l'ouverture optique ménagée dans le film bloquant la lumière.

12. Dispositif d'affichage d'image selon la revendication 11, dans lequel le film bloquant la lumière (23) comprend un film diélectrique multicouche (50R, 50G, 50B), et le filtre coloré (51) possède une configuration de couche d'une partie du film diélectrique multicouche compris dans le film bloquant la lumière (23).

13. Dispositif d'affichage d'image selon l'une des revendications précédentes, dans lequel un film protecteur (60) est formé sur le film bloquant la lumière (23).

14. Dispositif d'affichage d'image selon la revendication 1, dans lequel un condensateur est placé entre l'unité d'obturateur mécanique (26) et les électrodes de commande (25, 27).

15. Dispositif d'affichage d'image selon la revendication 1, dans lequel :

le circuit de commande d'obturateur (18) comprend :

un premier transistor à couches minces (5), dont une électrode parmi une électrode de source et une électrode de drain est connectée à la ligne de signal (6A), dont l'autre électrode parmi l'électrode de source et l'électrode de drain est connectée à un premier noeud, et dont une électrode de grille est connectée à la ligne de balayage (10) ;
un premier condensateur de stockage (4), dont une borne est connectée au premier noeud et dont l'autre borne est connectée à une première ligne de commande (11) ;
un troisième transistor à couches minces, à une électrode de grille duquel est connecté le premier noeud, dont une électrode de source est connectée à une deuxième ligne de commande, et dont une électrode de drain est connectée à un deuxième noeud ;
un deuxième condensateur de stockage (101), à une borne duquel est connecté le deuxième noeud et dont l'autre borne est connectée à une troisième ligne de commande ; et
un quatrième transistor à couches minces, à une électrode de grille duquel est connecté le deuxième noeud, dont une électrode de source est connectée à une quatrième ligne de commande, et dont une électrode de drain est connectée à l'unité d'obturateur mécanique (26).

16. Dispositif d'affichage d'image selon la revendication 15, dans lequel :

la première ligne de commande et la quatrième ligne de commande sont une même ligne de commande, et
le dispositif d'affichage d'image comprend en outre un cinquième transistor à couches minces, à une électrode de grille duquel est connecté le deuxième noeud, à une électrode de source duquel est appliquée une tension prédéterminée, et dont une électrode de drain est connectée à l'unité d'obturateur mécanique, le cinquième transistor à couches minces possédant une caractéristique de conduction de porteurs différente d'une caractéristique de conduction de porteurs du quatrième transistor à couches minces.

17. Dispositif d'affichage d'image selon la revendication 15, dans lequel la troisième ligne de commande et la quatrième ligne de commande sont une même ligne de commande.

# FIG.1

300

320

LIGHT EMISSION
CONTROL CIRCUIT
302

330

308

306

DISPLAY CONTROL
CIRCUIT

SYSTEM CONTROL
CIRCUIT
304

# FIG.2

# FIG.3

EP 2 523 033 B1

# FIG.4

# FIG.5

CONTROL ELECTRODE LINE 8A, 8B

SCANNING LINE 10

CAPACITY LINE 11

SOURCE VOLTAGE LINE FOR SHUTTER VOLTAGE WRITING 12

SHUTTER ELECTRODE 26

EP 2 523 033 B1

# FIG.6A

# FIG.6B

# FIG.6C

# FIG.7A

# FIG.7B

# FIG.7C

# FIG.8

FIG.9

# FIG.10

EP 2 523 033 B1

## FIG.11

# FIG.12

# FIG.13

EP 2 523 033 B1

# FIG.14

EP 2 523 033 B1

# FIG.15

CONTROL ELECTRODE LINE 8A, 8B

SCANNING LINE 10

CAPACITY LINE 11

SOURCE VOLTAGE LINE FOR SHUTTER VOLTAGE WRITING 12

SIGNAL STORAGE CAPACITOR 81

SHUTTER ELECTRODE 26

t1 t2  t13 t14

EP 2 523 033 B1

EP 2 523 033 B1

# FIG.16

40

# FIG.17

EP 2 523 033 B1

FIG.18

CONTROL
ELECTRODE LINE 8A, 8B

SCANNING LINE 10

CAPACITY LINE 11

SOURCE VOLTAGE LINE FOR
SHUTTER VOLTAGE WRITING 12

TRANSISTOR GATE LINE FOR
SHUTTER VOLTAGE WRITING 102

SOURCE VOLTAGE LINE FOR
NEXT STAGE SHUTTER WRITING 104

SHUTTER ELECTRODE 26

EP 2 523 033 B1

# FIG.19

# FIG.20

**EP 2 523 033 B1**

**Patent documents cited in the description**

- US 2008174532 A
- WO 2008091339 A
- WO 2006091738 A